(19) **Europäisches Patentamt / European Patent Office / Office européen des brevets**

(11) **EP 2 221 628 B1**

(12) **FASCICULE DE BREVET EUROPEEN**

(45) Date de publication et mention
de la délivrance du brevet:
**09.05.2012 Bulletin 2012/19**

(51) Int Cl.:
**G01S 19/24** $^{(2010.01)}$

(21) Numéro de dépôt: **10154015.1**

(22) Date de dépôt: **18.02.2010**

(54) **Procédé de lever d'ambiguïté, procédé de localisation d'un récepteur par radionavigation comprenant une étape de lever d'ambiguïté et récepteur de localisation**

Verfahren zur Behebung von Mehrdeutigkeit, Verfahren zur Lokalisierung eines Empfängers durch Funknavigation, das eine Etappe zur Behebung von Mehrdeutigkeit umfasst, und Lokalisierungsempfänger

Method for removing ambiguity, method for positioning a receiver by radionavigation including a step of removing ambiguity and positioning receiver

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.02.2009 FR 0900763**

(43) Date de publication de la demande:
**25.08.2010 Bulletin 2010/34**

(73) Titulaire: **Thales**
**92200 Neuilly Sur Seine (FR)**

(72) Inventeur: **Martin, Nicolas**
**26500 Bourg les Valence (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 598 677**

• **VINCENT HEIRIES ET AL: "Analysis of Non Ambiguous BOC Signal Acquisition Performance" ION GNSS. INTERNATIONAL TECHNICAL MEETING OF THE SATELLITEDIVISION OF THE INSTITUTE OF NAVIGATION, WASHINGTON, DC, US, no. 17TH, 21 septembre 2004 (2004-09-21), pages 2611-2622, XP002471945**
• **OLIVIER JULIEN ET AL: "ASPeCT: Unambiguous sine-BOC(n,n) acquisition/tracking technique for navigation applications" IEEE TRANSACTIONS ON AEROSPACE AND ELECTRONIC SYSTEMS, IEEE SERVICE CENTER, PISCATAWAY, NJ, US, vol. 43, no. 1, 1 janvier 2007 (2007-01-01), pages 150-162, XP011180922 ISSN: 0018-9251**
• **WARD P W: "A DESIGN TECHNIQUE TO REMOVE THE CORRELATION AMBIGUITY IN BINARY OFFSET CARRIER (BOC) SPREAD SPECTRUM SIGNALS" PROCEEDINGS OF THE ION NATIONAL TECHNICAL MEETING, THE INSTITUTE OF NAVIGATION, US, 26 janvier 2004 (2004-01-26), pages 886-896, XP001207302**

**Description**

Le domaine de l'invention est celui de la radionavigation par satellites.

La radionavigation par satellite permet d'obtenir la position du récepteur par une résolution voisine de celle de la triangulation, en utilisant les pseudo-distances mesurées à partir des temps de propagation des signaux envoyés par les satellites par un récepteur placé à la position à localiser.

Pour faciliter la réception des signaux émis par les satellites parcourant de grandes distances et étant émis avec des puissances limitées, on les rend le moins sensibles possible aux parasites à bande étroite en augmentant leur largeur de bande au moyen d'une technique d'étalement de spectre par modulation du signal par un code pseudo-aléatoire.

Les informations à transmettre au niveau des satellites, une fois mises sous la forme d'une suite de données binaires étalées en fréquence, sont transposées dans une plage de fréquence d'émission par modulation avec une porteuse d'émission.

En réception, les informations binaires contenues dans un signal radioélectrique de satellite d'un système de positionnement sont extraites par deux démodulations.

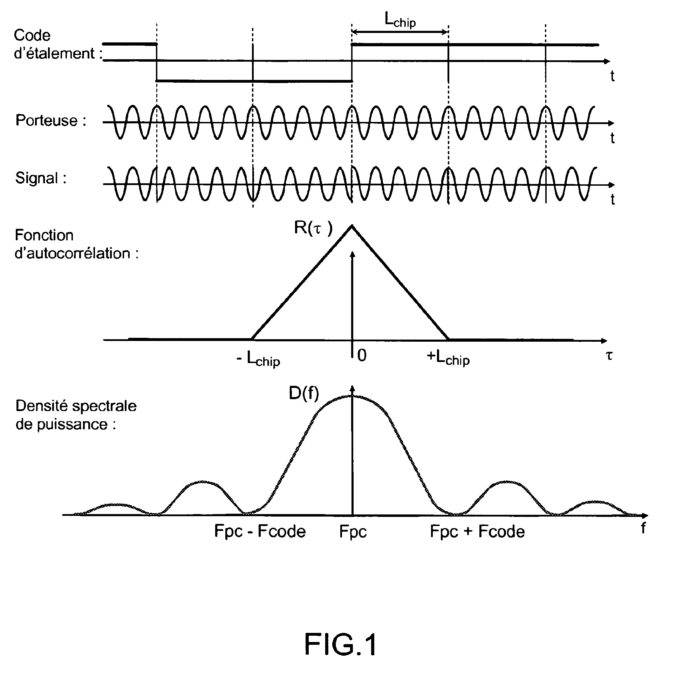

La technique de modulation BPSK (Binary Phase Shift Keying) consiste à moduler, comme visible sur la figure 1, la porteuse du signal émis par le satellite en RF (radio-fréquence) par une séquence pseudo-aléatoire connue à l'avance de +1 et de -1, appelé code d'étalement.

On a représenté sur la figure 1, de haut en bas, les diagrammes d'évolution dans le temps des différentes composantes d'un signal de radionavigation à modulation BPSK, à savoir, son code d'étalement, sa porteuse et le signal ainsi modulé, puis la fonction d'autocorrélation du signal ainsi modulé et enfin le spectre du signal modulé c'est-à-dire la répartition en fréquence de la densité spectrale de celui-ci.

A la réception au niveau de l'antenne on peut écrire :

$$S_{BPSK}(t) = \cos( 2\pi . Fpc . t_e + \varphi_0 ) . code( t_e )$$

Avec :

$t_e = t_e(t)$ : date à laquelle a été émis le signal reçu à l'instant courant t

$\varphi_0$ : déphasage du signal reçu

Ou de manière équivalente :

$$S_{BPSK}(t) = \cos( \varphi pc ) . code( \varphi code )$$

La modulation BPSK produit un spectre de puissance D(f) en sinus cardinal et une fonction d'autocorrélation R($\tau$) en triangle. La fonction d'autocorrélation R($\tau$) indique l'amplitude résultante de la corrélation du code d'étalement avec une réplique de ce code retardée de $\tau$. Cette fonction permet de prévoir le comportement du récepteur qui effectue une corrélation du signal reçu avec des répliques locales décalées du code d'étalement pour trouver l'énergie du signal et effectuer une mesure de pseudo-distance.

Certains systèmes de navigation utilisent des signaux à double décalage de porteuse constitués d'une porteuse en RF (dite "porteuse centrale") modulée à la fois par une sous-porteuse carrée et un code d'étalement. On appelle cette modulation, la modulation BOC. Cette modulation présente un spectre à deux composantes principales et une fonction d'autocorrélation avec des pics multiples.

On appelle ces signaux des signaux BOC (de l'anglo saxon "Binary Offset Carrier".)

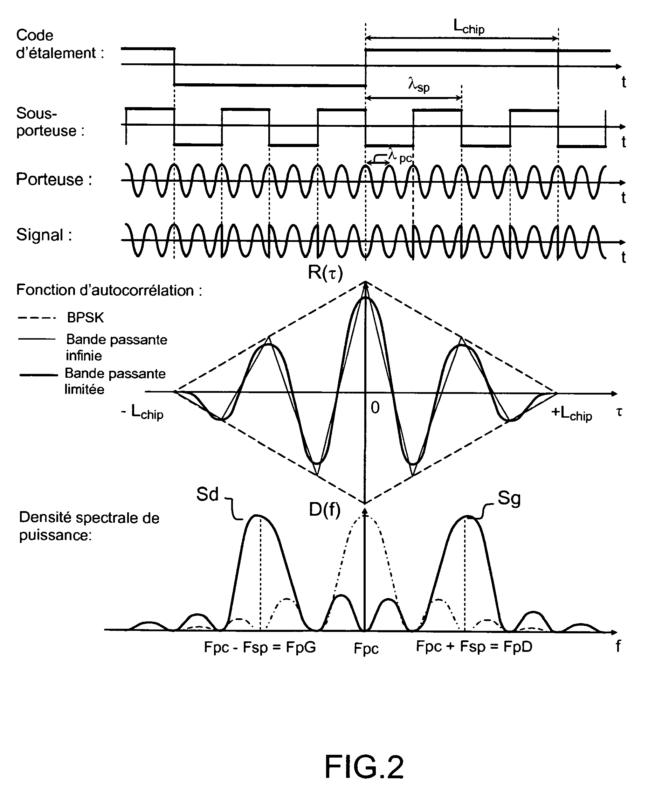

On a représenté sur la figure 2, de haut en bas, les diagrammes d'évolution dans le temps des différentes composantes d'un signal de radionavigation reçu par un récepteur, sans défauts à double décalage de porteuse, à savoir : son code d'étalement, la sous-porteuse rectangulaire, la porteuse puis la porteuse ainsi modulée, et la fonction d'autocorrélation, et enfin la répartition en fréquence de la densité spectrale du signal modulé.

A la réception au niveau de l'antenne on peut écrire :

$$S_{BOC}(t) = \cos( 2\pi . Fpc . t_e + \varphi_0 ).signe( sin(2\pi . Fsp . t_e )).code( t_e )$$

Avec :

signe(x) = 1 si x $\geq$ 0 et signe(x)= -1 si x < 0

Ou de manière équivalente :

$$S_{BOC}(t) = \cos( \varphi pc ) . \text{signe}( \sin ( \varphi sp ) ) . \text{code}( \varphi code )$$

Si on assimile la sous-porteuse à un signal sinusoïdal on écrit :

$$S_{BOC}(t) \cong \cos( \varphi pc ) . \sin( \varphi sp ) . \text{code}( \varphi code )$$

Soit :

$$S_{BOC}(t) \cong \tfrac{1}{2} [ \sin( \varphi pc + \varphi sp ) - \sin( \varphi pc - \varphi sp ) ] . \text{code}( \varphi code )$$

Ou de manière équivalente :

$$S_{BOC}(t) \cong \tfrac{1}{2}.\sin(2\pi.FpD.t_e + \varphi_0).\text{code}(t_e) - \tfrac{1}{2}.\sin(2\pi.FpG.t_e + \varphi_0).\text{code}(t_e)$$

On retrouve les deux composantes principales de type BPSK avec une porteuse à la fréquence FpD décalée à droite et une porteuse à la fréquence FpG décalée à gauche.

Par la suite, il sera convenu des notations et définitions suivantes. La fréquence de porteuse centrale Fpc est, par définition, la fréquence de la porteuse modulée par le code et la sous-porteuse carrée, c'est la fréquence qui est située au milieu des deux fréquences porteuses des deux composantes droite Sd et gauche Sg.

La fréquence de sous-porteuse Fsp est par définition la fréquence de la sous-porteuse carrée, qui se trouve être égale à la distance entre la fréquence de porteuse de la composante gauche FpG ou droite FpD du spectre et la fréquence de porteuse centrale Fpc.

La fréquence du code est par définition l'inverse de la durée d'un créneau de code Lchip.

Par la suite, on utilisera les notations suivantes

Fpc Fréquence de porteuse centrale

$$Fpc = ( FpG + FpD )/2$$

$\varphi pc$ est la phase de la porteuse centrale reçue

$$\varphi pc = 2.\pi.Fpc.t_e$$

Fsp Fréquence de sous-porteuse

$$Fsp = -( FpG - FpD )/2$$

$\varphi sp$ phase de la sous-porteuse reçue (rad)

$$\varphi sp = 2.\pi.Fsp.t_e$$

$\lambda sp$ longueur d'onde de la sous-porteuse

$$\lambda spr = c \, / \, Fsp$$

FpD Fréquence de porteuse de la composante droite
FpG Fréquence de porteuse de la composante gauche

$$FpG = Fpc - Fsp$$

$$FpD = Fpc + Fsp$$

Fcode Fréquence du code d'étalement
$\lambda pc$ est la phase du code reçu

$$\varphi code = t_e$$

$\lambda code$ est la longueur d'onde du code d'étalement

$$\lambda code = c \, / \, Fcode$$

$$Lchip = 1 \, / \, Fcode$$

$\varphi code$ est la phase du code d'étalement

$$\varphi code = Fcode.t$$

Le but de la modulation BOC est double :

- libérer le spectre entre les deux composantes pour d'autres signaux déjà existants,
- améliorer la précision des mesures en présence de bruit thermique et de multi-trajets.

L'inconvénient de cette modulation est que pour démoduler correctement le signal, il faut trouver le pic principal de la fonction d'autocorrélation afin d'avoir le maximum d'énergie et de fournir des mesures cohérentes entre les satellites, sinon on fournit des mesures de pseudo-distance biaisées.

Il existe des procédés du type BPSK (dits procédés "BPSK like") dans lesquels, dans une phase de transition, on démodule en parallèle les deux composantes gauche et droite du spectre des signaux à double décalage de porteuse envoyés par les satellites comme si chaque composante était un signal classique BPSK, sans sous-porteuse locale, chacune de ces composantes ayant une porteuse décalée à gauche ou à droite. Le traitement est effectué en parallèle pour les signaux provenant des différents satellites.

La démodulation consiste classiquement à corréler en parallèle des composantes générées localement avec les composantes reçues en provenance du satellite considéré. La combinaison des composantes locales forme un signal local comprenant un code local et une porteuse locale.

Le récepteur cherche à asservir en phase, au moyen de boucles de code et de porteuse centrale, les codes locaux et, respectivement, les porteuses locales des composantes locales, avec les codes et, respectivement, les porteuses des deux composantes reçues en recherchant le maximum de la fonction d'autocorrélation (dans le mode BPSK like, la fonction d'autocorrélation correspond pratiquement à l'enveloppe de la fonction d'autocorrélation du signal à double décalage de porteuse).

Une fois que la boucle de code a convergé sur le maximum de l'enveloppe de la fonction d'autocorrélation, le récepteur procède à une phase de poursuite. Dans la phase de poursuite, on suit le pic principal de la fonction d'autocorrélation du signal BOC en mode BOC ou en mode BOC reconstitué au moyen de boucles de code et de porteuse centrale.

Dans le mode BOC on ne décompose par le signal en deux composantes droite et gauche.

Dans la phase de poursuite en BOC reconstitué, on démodule, en mode BPSK, les deux composantes gauche et droite, on somme de manière cohérente les composantes complexes gauche et droite démodulées et on ferme les boucles de porteuse centrale et de code.

Les mesures de pseudo-vitesse et pseudo-distances, sont élaborées à partir, respectivement, de la phase de la porteuse locale et de la phase du code local pendant la phase de poursuite.

Cependant, lors du passage en phase de poursuite, il peut persister une ambiguïté. On n'a pas la certitude que le fait de se positionner sur le maximum de l'enveloppe de la fonction d'autocorrélation en phase de transition, nous conduise, en phase de poursuite, à suivre le pic principal de la fonction d'autocorrélation du signal en mode BOC ou BOC reconstitué.

Lorsque le signal possède la forme idéale, parfaitement symétrique, comme c'est le cas pour la figure 2, la fonction d'autocorrélation $R(\tau)$ présente toujours un pic principal prépondérant au centre et des pics secondaires de part et d'autre d'amplitude moindre. Dans ce cas, il est relativement aisé, en comparant les amplitudes ou en exploitant l'enveloppe de cette fonction, de se placer avec une grande confiance sur le pic principal de cette fonction.

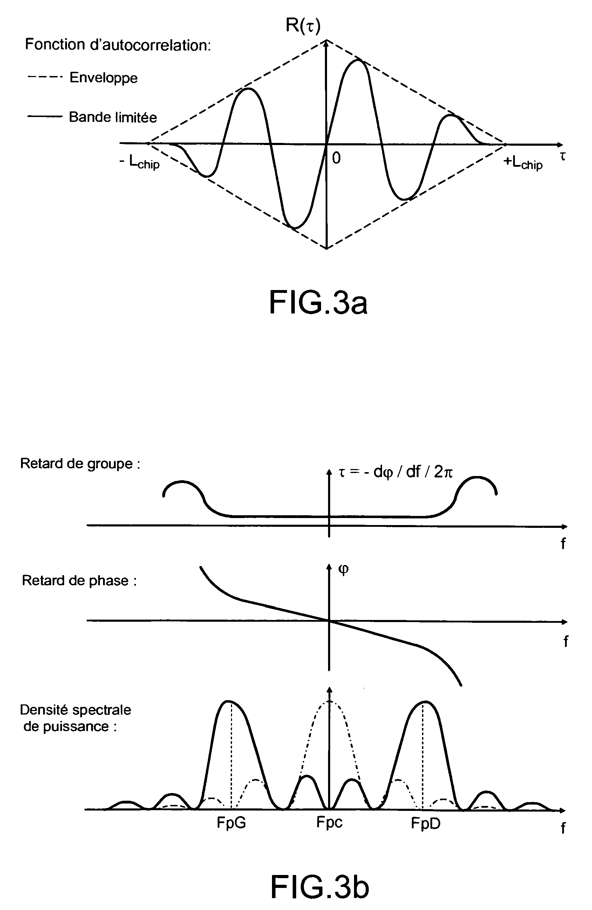

Cependant, lorsque le signal est déformé par les voies analogiques (fonctions de transfert non idéales sur l'antenne, les filtres, les amplificateurs et les multiplicateurs de changement de fréquence analogiques) au sein du récepteur ou au sein du satellite, il est possible d'obtenir une fonction d'autocorrélation non symétrique, voire dans le pire cas anti-symétrique avec deux pics principaux de part et d'autre du centre, de signes contraires, comme représenté sur la figure 3a. Dans ce cas, il est difficile, voire impossible, de faire le choix du passage en mode poursuite nominale sur un critère de maximum d'amplitude de l'enveloppe de la fonction d'autocorrélation. En outre, on perd de l'énergie par rapport au cas symétrique.

Ce phénomène est dû à une incohérence entre le déphasage relatif des deux composantes d'un côté et le retard de groupe moyen sur les deux composantes de l'autre. Cette incohérence est due à un retard de groupe non constant dans la bande passante (ou autrement dit un retard de phase non linéaire en fréquence). On appelle ce défaut « différentiel de phase ». Un exemple de ce phénomène a été représenté en figure 3b. Sur cette figure, on a représenté, de haut en bas, les évolutions, en fonction de la fréquence, du retard de groupe, du retard de phase et de la répartition spectrale de l'énergie du signal présentant ces défauts. Les mêmes phénomènes se produisent lorsque des défauts affectent les signaux émis par un satellite.

La présence de multi-trajets peut également biaiser la convergence du code en mode BPSK et induire un faux accrochage sur un pic secondaire en phase poursuite si l'erreur de code, c'est-à-dire la différence de phase entre le code local et le code du signal reçu dépasse, à l'entrée en phase de poursuite, la demi-distance entre deux pics consécutifs de la fonction d'autocorrélation du signal BOC.

Dans le cas idéal où les filtres à bande limitée à l'émission et à la réception laissent passer toutes les composantes secondaires du signal situés entre les 2 composantes principales droite et gauche du spectre sans les déformer (gabarit idéal), la forme de la fonction d'autocorrélation en démodulation BPSK reste suffisamment triangulaire pour permettre, avant le passage en mode poursuite, la convergence du code vers le pic principal de la fonction d'autocorrélation du signal BOC même en présence de multi-trajets.

Cependant les filtres analogiques non idéaux à l'émission et à la réception arrondissent la forme de la fonction d'autocorrélation, ce qui augmente la sensibilité aux multi-trajets lors de la convergence du code en phase de transition, avec un risque réel de faux accrochage sur un pic secondaire de la fonction d'autocorrélation en phase de poursuite.

Afin de limiter les risques de faux accrochage sur un pic secondaire de la fonction d'autocorrélation lors de la phase de poursuite, on connaît des procédés de lever d'ambiguïté, pendant la phase de transition qui précède la phase de poursuite, adaptés pour faire converger le code, avant la poursuite, sur le pic principal de la fonction d'autocorrélation du signal reçu.

Le procédé de lever ambiguïté a pour objet de générer un code local qui soit suffisamment proche du code reçu, avant le passage en mode poursuite, pour assurer que la poursuite se fait sur le pic principal de la fonction d'autocorrélation du signal BOC. On considèrera dans la suite que l'erreur de code est nulle lorsque l'on est sur le sommet du pic principal de la fonction d'autocorrélation du signal BOC.

Dans l'article "Acquisition of the PRS BOC(15,2.5) Signal in Presence of Multipath" de Martin, N; Guichon, H; Revol, M; Hollreiser, M; Crisci; on propose un procédé de lever d'ambiguïté pour éviter les faux accrochages sur un pic secondaire, dus aux multi-trajets.

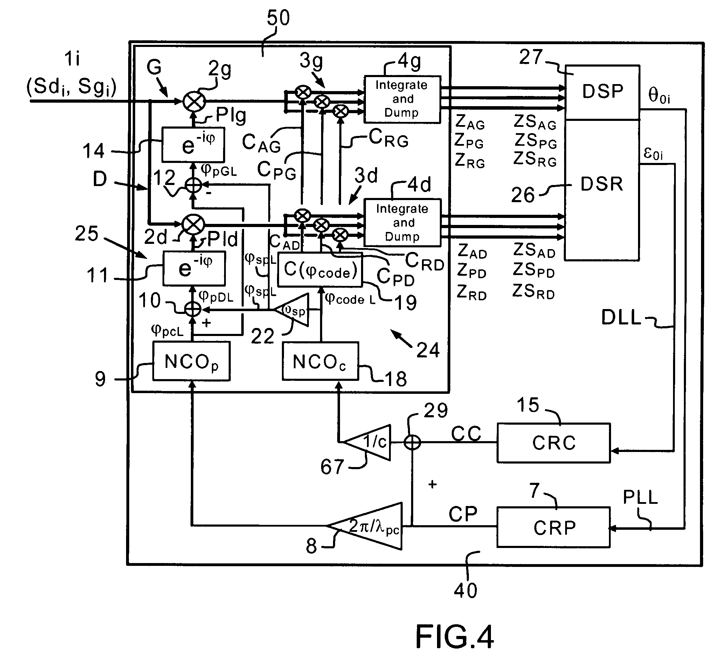

Nous allons tout d'abord décrire un canal de traitement numérique d'un récepteur, adaptée pour mettre en oeuvre un procédé de lever d'ambiguïté pour un signal BOC émis par un satellite d'indice i. Les signaux émis par le satellite sont, préalablement au traitement par les canaux de traitement numériques, reçus et numérisés par les voies de traitement analogique. Un canal de traitement numérique est représenté sous forme d'un bloc-diagramme représenté sur la figure 4. Un canal de traitement numérique est apte à traiter des signaux reçus 1 i en provenance d'un même satellite i.

Le spectre d'un signal BOC comprend deux composantes spectrales $Sd_i$ et $Sg_i$, comme visible sur la figure 2.

Un signal BOC est assimilé à un signal à deux composantes BPSK avec un code identique mais deux porteuses distinctes, une relation déterministe et connue existant entre les phases d'émission, avant les défauts dus à la partie analogique du récepteur (et éventuellement du satellite).

Le canal de traitement numérique du satellite d'indice i, présente une voie de corrélation matérielle 50 apte à générer les codes locaux et les porteuses locales des composantes droite et gauche du signal local et à corréler, ensuite, ces composantes locales avec les composantes droite et gauche du signal reçu. Le signal local comprend, lui-même, un code local et deux porteuses locales droite et gauche et une porteuse centrale locale.

Le canal logiciel 40 comporte une boucle de code DLL et une boucle de porteuse centrale PLL aptes à identifier des écarts de phase entre le code local et le code du signal reçu et respectivement, la porteuse centrale locale et la porteuse centrale reçue. Les boucles de code et de porteuse centrale génèrent ensuite des commandes pour piloter la voie de corrélation matérielle 50 et générer un nouveau signal local.

La boucle de phase de porteuse centrale PLL permet d'assurer une poursuite précise de la dynamique des phases des signaux (due au mouvement de l'antenne, aux dérives de l'horloge du récepteur et aux déplacements des satellites).

La voie de corrélation matérielle 50 comprend deux canaux de corrélation gauche G et droite D, pour réaliser la démodulation en mode BPSK. Les deux canaux de corrélation gauche G et droite D sont aptes à démoduler indépendamment, respectivement, les deux composantes spectrales droite $Sd_i$ et gauche $Sg_i$ d'un signal de radionavigation en provenance d'un satellite d'indice i. Sur la figure 4, les traits gras représentent des signaux complexes et les traits fins des signaux réels.

Les canaux de corrélation gauche G et droite D comportent des moyens de corrélation des composantes spectrales droite $Sd_i$ et gauche $Sg_i$ d'un signal reçu 1 i avec les composantes locales droite et gauche d'un signal produit localement de sorte à produire des sorties complexes des voies de corrélation droite $Z_{AD}$, $Z_{PD}$, $Z_{RD}$ et, respectivement, gauche $Z_{AG}$, $Z_{PG}$, $Z_{RG}$. Ces sorties sont différentes pour chaque canal de traitement numérique d'indice i mais pour plus de clarté, on n'indique pas l'indice i sur ces sorties.

Les moyens de corrélation gauche et droite comprennent chacun un multiplicateur 2g, 2d dont la sortie est reliée à un ensemble 3g, 3d de trois multiplicateurs de corrélation mis en parallèle, dont les sorties sont reliées à un intégrateur de corrélation 4g, 4d.

Les intégrateurs 4g, 4d ont le rôle de produire des échantillons de signal démodulé, désétalé gauche $Z_{AG}$, $Z_{PG}$, $Z_{RG}$ (avance, ponctuel, retard) et droite $Z_{AD}$, $Z_{PD}$, $Z_{RD}$ à basse cadence, par exemple, toutes les 20ms, à la partie logicielle 40 à partir des produits en sortie des démodulateurs de code élaborés à haute cadence.

On désigne par démodulateur de code le multiplicateur entre une composante reçue démodulée en porteuse, complexe, et un code local.

On désigne par corrélateur complexe l'ensemble formé par un démodulateur de code et un intégrateur 4g, 4d avec remise à zéro périodique. Le produit résultant complexe, est le signal reçu démodulé désétalé. Ici nous avons trois corrélateurs complexes par voie de corrélation.

La voie matérielle 50 comprend également un circuit de génération de code 24 apte à générer et à fournir des codes locaux droite en avance $C_{AD}$, ponctuel $C_{PD}$, en retard $C_{RD}$ et gauche en avance $C_{AG}$, ponctuel $C_{PG}$, en retard $C_{RG}$ aux canaux de corrélation droite D et gauche G, à partir de commandes de code CC et de commandes de porteuse CP.

Le circuit de génération de code 24 comprend un intégrateur numérique de phase de code NCOc 18 piloté par des commandes de code CC en vitesse. Les commandes de code en vitesse sont préalablement amplifiées au moyen d'un amplificateur de commandes de code en vitesse 67. Les commandes en vitesse de porteuse centrale CP sont ajoutées aux commandes en vitesse de code au moyen d'un additionneur 29, avant l'amplificateur de commandes de code en vitesse 67. On dit que la boucle de porteuse aide la boucle de code afin de réduire le traînage de la boucle de code dû à la dynamique, ce qui permet de réduire la bande de boucle de code et donc le bruit sur la mesure de la phase du code pour la mesure de pseudo-distance.

L'intégrateur numérique de phase de code NCOc, 18 est apte à générer une phase de code local φcodeL. Il s'agit d'un intégrateur numérique (sans remise à zéro) qui produit la phase du code local à haute fréquence (~100 MHz) à partir de commandes en vitesse et en saut remises à jour par le logiciel à basse fréquence (~50 Hz).

Le circuit de corrélation de code 24 comprend un générateur de codes locaux 19 piloté par la phase de code local φcodeL et fournissant des répliques de codes locaux droite $C_{AD}$, $C_{PD}$, $C_{RD}$ et gauche $C_{AG}$, $C_{PG}$, $C_{RG}$, aux canaux de corrélation respectifs droite D et gauche G.

La voie matérielle 50 comprend en outre un circuit de corrélation de porteuse 25 apte à générer et à fournir et des porteuses complexes locales droite Pld et gauche Plg, aux canaux de corrélation droite D et gauche G à partir des commandes de vitesse de porteuse centrale.

Les commandes, les répliques des codes locaux et les porteuses locales sont produites pour chaque canal de traitement numérique d'indice i mais, pour plus de clarté, on n'indique dans le texte de la demande de brevet l'indice i du satellite pour ces données.

Le circuit de corrélation de porteuse 25 comprend un intégrateur numérique de phase de porteuse centrale locale NCOp 9 piloté par des commandes de vitesse de porteuse centrale. Les commandes de porteuse CP sont préalablement amplifiées au moyen d'un second amplificateur 8.

L'intégrateur numérique de phase de porteuse centrale locale NCOp 9 génère la phase de porteuse centrale locale $\varphi$pcL. La phase de sous-porteuse locale $\varphi$spL, obtenue après amplification de la phase de code local $\varphi$codeL au moyen d'un amplificateur de sous-porteuse 22, est ajoutée et soustraite simultanément à la phase de porteuse centrale locale $\varphi$pcL pour produire respectivement deux phases de porteuses locales droite $\varphi$pDL et gauche $\varphi$pGL. A cet effet, la voie matérielle 50 comprend un additionneur droit 10 sommant la phase de porteuse centrale locale $\varphi$pcL et la phase de sous-porteuse locale $\varphi$spL de sorte à obtenir une phase locale de porteuse droite et un soustracteur gauche 12 soustrayant la phase de sous-porteuse locale $\varphi$spL à la phase de porteuse centrale locale $\varphi$pcL de sorte à obtenir une phase de porteuse locale gauche $\varphi$pGL.

La voie matérielle 50 comprend en outre des générateurs de porteuses droite 11 et gauche 14, générant les porteuses locales complexes droite Plg et gauche Pld à partir des phases de porteuse locales droite $\varphi$pDL et gauche $\varphi$pGL. Les porteuses locales ainsi produites sont envoyées aux canaux de corrélation gauche et droite.

La boucle de code DLL comporte un discriminateur de code DSR, 26, faisant, à partir de signaux issus des sorties complexes des voies de corrélation gauche et droite qui lui sont transmis toutes les 20 ms, des estimations de l'erreur de code $\varepsilon_{0i}$. Le discriminateur de code fournit les estimations instantanées $\varepsilon_{0i}$ de l'erreur de code à un correcteur de code CRC 15. Le correcteur de code CRC, 15, utilise ces estimations pour générer des commandes de code CC en vitesse toutes les 20 ms. L'erreur de code $\varepsilon_i$ pour un satellite i représente la différence entre la phase du code local et celle du code du signal reçu du satellite d'indice i.

La boucle de phase de porteuse centrale PLL comporte un discriminateur de porteuse DSP, 27 faisant, à partir de signaux issus des sorties ponctuelles complexes des voies de corrélation droite $ZS_{PD}$ et gauche $ZS_{PG}$ une estimation de l'erreur de phase de porteuse centrale $\theta_{0i}$ et fournissant celle-ci à un correcteur de porteuse centrale CRP, 7, générant des commandes de porteuse centrale CP sous la forme de vitesse de porteuse.

L'erreur de phase de porteuse centrale $\theta_{0i}$ représente la différence entre la phase de la porteuse centrale du signal reçu et la phase de la porteuse centrale du signal local.

Les signaux issus des sorties complexes des voies de corrélation droite $ZS_{AD}$, $ZS_{PD}$, $ZS_{RD}$ et gauche $ZS_{AG}$, $ZS_{PG}$, $ZS_{RG}$ utilisés par les discriminateurs de porteuse et de code sont ici les sorties complexes des voies de corrélation droite $Z_{AD}$, $Z_{PD}$, $Z_{RD}$ et gauche $Z_{AG}$, $Z_{PG}$, $Z_{RG}$.

Le procédé de localisation d'un mobile par radionavigation, décrit dans l'article cité précédemment comprend une suite d'étapes. Tout d'abord on procède à une étape recherche en énergie. La phase de recherche consiste à détecter le signal émis par le satellite d'indice i en recherchant un pic de corrélation entre le signal local et le signal reçu. Dans cette phase de recherche, on démodule parallèlement les deux composantes droite et gauche du signal reçu au moyen des voies matérielles 50 telles que décrites précédemment en balayant, en boucle ouverte, plusieurs hypothèses sur la phase du code et sur la variation de fréquence de la porteuse centrale appelée Doppler. On mesure l'énergie en sortie des corrélateurs. Lorsqu'une énergie supérieure à un seuil prédéterminé est détectée, c'est que le signal est présent.

Le récepteur procède ensuite à une phase de transition qui a pour objet de faire converger le code vers le maximum de l'enveloppe de la fonction d'autocorrélation en mode BPSK (à savoir le maximum de l'enveloppe de la fonction d'autocorrélation du signal BOC). Pour cela on démodule parallèlement, en mode BPSK, les composantes droite et gauche du signal reçu au moyen de la voie de corrélation matérielle 50 et on ferme des boucles de fréquence et de code non représentées. La boucle de fréquence asservit la fréquence de la porteuse centrale locale sur la fréquence de porteuse centrale du signal reçu.

On réalise ensuite une phase de lever d'ambiguïté pour faire converger le code, en mode BPSK, sur le pic principal de la fonction d'autocorrélation BOC du signal reçu au moyen du canal de traitement numérique représenté sur la figure 4.

Le procédé de lever d'ambiguïté proposé dans l'article précité est réalisé en parallèle sur les signaux issus des différents satellites dans les canaux de traitement numérique tels que décrits précédemment. Pour les signaux provenant d'un satellite d'indice i, on réalise le traitement suivant jusqu'à la convergence de la boucle de code :

On démodule les composantes droite et gauche du signal reçu par un procédé de démodulation BPSK classique au moyen des canaux droite et gauche. On ferme une boucle de code et une boucle de phase de porteuse centrale pour générer des commandes de porteuse centrale et des commandes de code après avoir fait des estimations des erreurs de code $\varepsilon_{0i}$ et des erreurs de phase de porteuse centrale $\theta_{0i}$.

On génère, au moyen des circuits de génération de code 24 et de porteuse centrale 25, des nouveaux codes locaux et de nouvelles porteuses centrales locales pour les deux composantes locales droite et gauche à partir des commandes de porteuse centrale et de code et on démodule à nouveau en mode BPSK tant que la boucle de code n'a pas convergé.

Le procédé de lever d'ambiguïté proposé comprend deux étapes successives. Dans une première étape on fait converger la boucle de code avec un circuit de corrélation de type corrélateur étroit jusqu'à ce que l'écart type de l'erreur de code soit inférieure à un premier seuil de convergence de code. A l'issue de cette étape le risque de faux accrochage sur un pic secondaire existe toujours car l'erreur de code peut être malgré tout supérieure à la moitié de la distance entre deux pics de la fonction d'autocorrélation du signal BOC, à cause de la présence éventuelle de multi-trajets.

Dans une seconde étape, on refait converger la boucle de code, avec un circuit de corrélation de type Double Delta. Le code peut alors converger jusqu'à ce que l'écart type de l'erreur de code soit inférieur à un second seuil de convergence de code. A l'issue de cette étape, l'erreur sur le code est supposée inférieure à la demi-distance entre deux pics, qui est typiquement de 5m pour un signal BOC généré par le système Galileo. Le risque de faux accrochage sur un pic secondaire, lors de la phase de poursuite ultérieure est nettement réduite.

A l'issu de la phase de lever d'ambiguïté, on passe dans une phase de poursuite en mode BOC avec une seule voie de corrélation et une seule sous-porteuse locale carrée.

Le système de localisation par satellite calcule des pseudo-distances à partir de valeurs de phase de code issues de l'étape de poursuite.

Le procédé de lever d'ambiguïté décrit présente l'avantage d'assurer, avec une bonne robustesse aux multi-trajets, que la poursuite nominale se fasse sur le pic de principal de la fonction d'autocorrélation.

Cependant, les estimations $\theta_{0i}$ des erreurs de code sur lesquelles se base le correcteur de code sont bruitées et biaisées par des multi-trajets, ce qui induit un risque de faux accrochage non négligeable sur un pic secondaire. Cela a pour conséquence de ne pas assurer l'intégrité des mesures de pseudo-distances et de pseudo-vitesses réalisées par un procédé de localisation basé sur un procédé de lever d'ambiguïté selon l'art antérieur.

Le but de l'invention est de remédier aux inconvénients précités.

A cet effet, l'invention a pour objet un procédé de lever d'ambiguïté pour déterminer le pic principal de la fonction d'autocorrélation de signaux émis par un ensemble de satellites et reçus par un récepteur d'un système de radionavigation, un signal reçu provenant d'un satellite comprenant deux composantes spectrales reçues droite et gauche espacées en fréquence ainsi qu'un code d'étalement, une sous-porteuse et une porteuse centrale, ledit procédé de lever d'ambiguïté étant réalisé en parallèle pour les signaux provenant des différents satellites en suivant les étapes suivantes :

- on démodule les composantes reçues droite et gauche par un procédé de démodulation BPSK dans lequel on corrèle des composantes locales droite et gauche, comprenant une porteuse complexe locale respectivement droite et gauche et des codes locaux respectivement droite et gauche, avec les composantes droite et gauche du signal reçu de sorte à produire des sorties complexes des voies de corrélation droite et gauche,
- on poursuit la porteuse centrale au moyen d'une boucle de porteuse centrale qui calcule, à partir de signaux issus des sorties complexes des voies de corrélation droite et gauche, des estimations d'erreurs de phase de porteuse centrale de sorte à générer des commandes de porteuse,
- on poursuit le code au moyen d'une boucle de code qui calcule, à partir de signaux issus de sorties complexes des voies de corrélation droite et gauche, des estimations instantanées d'erreurs de code de sorte à générer des commandes de code,
- on génère de nouvelles porteuses complexes locales droite et gauche et de nouveaux codes des composantes locales droite et gauche à partir des commandes de code et des commandes de porteuses,

les commandes de code étant en outre générées à partir d'estimations instantanées d'erreurs de phase de sous-porteuse ($\Delta\varphi_{oi}$), calculées à partir de signaux issus des sorties complexes des voies de corrélation droite et gauche.

Le procédé selon l'invention peut présenter en outre, une ou plusieurs des caractéristiques suivantes prises ensemble ou séparément :

- la génération des commandes de code est effectuée sur la base d'un filtre de Kalman à deux états recalé à partir des estimations instantanées des erreurs de code et des estimations instantanées des erreurs de phase de sous-porteuse,
- les signaux issus des sorties complexes des voies de corrélation droite et gauche sont égaux aux sorties des voies de corrélation droite et gauche,
- on compense la différence de phase entre les composantes gauche et droite en sortie des voies de corrélation au moyen d'une estimation filtrée de l'erreur de phase de sous-porteuse calculée à partir d'estimations instantanées d'erreurs de phase de sous-porteuse et d'estimations instantanées d'erreurs de code de sorte que les signaux issus des sorties complexes des voies de corrélation droite et gauche sont des sorties des voies de corrélation compensées respectivement droite et gauche et on réalise une poursuite cohérente de la porteuse centrale,
- après l'étape de génération des commandes de code et des commandes de porteuse :

    i. on génère une phase de code local, une phase de sous-porteuse locale et une phase de porteuse centrale locale;

ii. on réalise la compensation de la différence de phase entre les composantes gauche et droite en sortie des voies de corrélation en ajoutant l'estimation filtrée de l'erreur de phase de sous-porteuse à la phase de sous-porteuse locale,

- on réalise la compensation par rotation complexe différentielle des sorties complexes des voies de corrélation droite et gauche, la rotation complexe différentielle appliquée étant une rotation d'une phase égale à l'estimation filtrée de l'erreur de phase de sous-porteuse,
- on réalise une poursuite pseudo-cohérente du code,
- la corrélation est réalisée de façon étroite,
- il converge, pour le signal provenant d'un satellite, lorsque l'écart type de l'erreur de code associé à ce signal est inférieur à un seuil de code prédéterminé, l'écart type étant calculée à partir de la matrice de covariance du filtre de Kalman,
- le critère de convergence est vérifié lorsqu'en outre un critère de cohérence sur le différentiel de phase est vérifié, le critère de cohérence étant vérifié lorsque, pour un premier nombre de satellites supérieur ou égal à un nombre de satellite minimum prédéterminé, l'écart entre l'estimation filtrée du différentiel de phase et la moyenne de ces estimations effectuée sur le premier nombre de satellites, est inférieur à un seuil de différentiel de phase prédéterminé,
- il comprend une étape de lever d'ambiguïté réalisée au moyen du procédé selon l'une quelconque des revendications précédentes,
- l'étape de lever d'ambiguïté est précédée d'une étape de recherche en énergie et d'une étape de transition,
- il comprend en outre une étape de poursuite débutant, pour un signal reçu provenant d'un satellite, lorsque le procédé de lever d'ambiguïté a convergé pour ce signal,
- l'étape de poursuite est une poursuite en mode BOC reconstitué dans laquelle on compense les différentiels de phase dues aux voies analogiques au moyen d'une compensation commune la compensation commune étant initialisée, au démarrage de la phase de poursuite, à la valeur de la moyenne des estimations filtrées des différentiels de phase à l'issue de la phase de lever d'ambiguïté, cette moyenne étant effectuée sur le premier nombre Ns satellites respectant le critère de convergence,
- il comprend une étape de calculs de pseudo-distances pendant l'étape de lever d'ambiguïté,
- il comprend une étape de calcul de pseudo-distances pendant l'étape de poursuite.

L'invention a également pour objet un récepteur de localisation apte à mettre en oeuvre le procédé de lever d'ambiguïté selon l'invention, ledit récepteur comprenant des voies analogiques, recevant et numérisant les signaux provenance de différents satellites, ainsi que des canaux de traitement numérique étant chacun apte à traiter les signaux reçus en provenance d'un satellite et provenant des voies analogiques, un canal de traitement numérique comportant une voie de corrélation matérielle comportant :

- des canaux de corrélation droite et gauche aptes à démoduler indépendamment deux composantes spectrales droite et gauche d'un signal reçu, lesdits canaux de corrélation comportant des moyens de corrélation des composantes spectrales droite et gauche d'un signal reçu avec les composantes locales droite et gauche d'un signal produit localement de sorte à produire des sorties complexes des voies de corrélation droite et gauche,
- un circuit de corrélation de code comprenant au moins un intégrateur numérique de phase de code NCOc, piloté par des commandes de code et de porteuse, étant apte à générer des phases locales de code pilotant au moins un générateur de codes locaux et fournissant des codes locaux droite et gauche aux canaux de corrélation respectifs droite et gauche,
- un circuit de corrélation de porteuse comprenant des générateurs de porteuses droite et gauche des porteuses complexes locales droite et gauche à partir de phases générées par au moins un intégrateur numérique de phase de porteuse centrale, à partir d'au moins des commandes de porteuse, les porteuses complexes locales droite et gauche étant fournies aux canaux de corrélation droite et gauche,
- un canal de traitement numérique comportant en outre un canal logiciel comportant une boucle de code et une boucle de phase de porteuse centrale,
- la boucle de code comportant un discriminateur de code DSR calculant, à partir de signaux issus des sorties complexes des voies de corrélation droite et gauche des estimations instantanées d'une erreur de code, et fournissant ces estimations à un correcteur de code CRC générant des commandes de code,
- la boucle de phase de porteuse centrale comportant un discriminateur de porteuse DSP calculant, à partir de signaux issus des sorties complexes des voies de corrélation droite et gauche, des estimations d'une erreur de phase de porteuse centrale et fournissant celle-ci à un correcteur de porteuse CRP produisant des commandes de porteuse,

la boucle de code comprenant en outre un discriminateur de phase de sous-porteuse DSSP calculant, à partir des signaux issus des sorties complexes des voies de corrélation droite et gauche, des estimations instantanée d'une erreur de phase de sous-porteuse ces estimations étant transmises au correcteur de code CRC qui est réalisé sur la base d'un filtre de Kalman à deux états recalé à partir des estimations instantanées de l'erreur de code et des estimations instantanées de l'erreur de phase de sous-porteuse.

Le récepteur selon l'invention peut présenter en outre, une ou plusieurs des caractéristiques suivantes prises ensemble ou séparément :

- les signaux issus des sorties complexes des voies de corrélation droite et gauche sont les sorties des voies de corrélation droite et gauche,
- le circuit de corrélation de porteuse et de code sont du type corrélateur étroit,
- le correcteur de code CRC calcule, en outre, une estimation filtrée de l'erreur de phase de sous-porteuse et en ce qu'une voie de corrélation numérique comprend un moyen de compensation apte à compenser la différence de phase entre les composantes gauche et droite en sortie des voies de corrélation de sorte à fournir aux discriminateurs de porteuse DSP, de code DSR et de phase de sous-porteuse DSSP, des signaux issus des sorties complexes des voies de corrélation droite et gauche qui sont des sorties des voies de corrélation compensées respectivement droite et gauche, ledit discriminateur de phase de porteuse centrale DSP réalisant une sommation cohérente des sorties des voies de corrélation compensées respectivement droite et gauche avant de calculer les estimations des erreurs de phase de porteuse centrale.
- le discriminateur de code DSR est du type pseudo-cohérent.
- le moyen de compensation est réalisé sous forme d'un compensateur appliquant une rotation complexe différentielle, d'une phase égale à l'estimation filtrée de l'erreur de phase de sous-porteuse, aux sorties complexes des voies de corrélation droite et gauche) de sorte à produire des sorties des voies de corrélation compensées respectivement droite et gauche,
- le circuit de corrélation de porteuse comportant au moins un intégrateur numérique de phase de porteuse centrale NCOp, piloté par au

moins des commandes de porteuse, étant apte à générer des phases locales de porteuse centrale et à les transmettre à au moins un générateur de codes locaux et la voie de corrélation matérielle comporte un amplificateur de sous-porteuse apte à générer une phase locale de sous-porteuse à partir de la phase locale de code et un moyen de compensation est réalisé sous forme d'un additionneur ajoutant l'estimation filtrée de l'erreur de phase de sous-porteuse à la phase locale de sous-porteuse,

- le circuit de corrélation de code comprend :

  i. un intégrateur numérique de phase de code NCOc produisant une phase locale de code qui est transmise à au moins un générateur de codes locaux,
  ii. un intégrateur numérique de phase de porteuse centrale générant une phase locale de porteuse centrale au moyen des commandes de porteuse,
  iii. un additionneur droite sommant la phase locale de porteuse centrale et la phase locale de sous-porteuse de sorte à obtenir une phase locale de porteuse droite,
  iv. un soustracteur gauche soustrayant la phase locale de sous-porteuse à la phase locale de porteuse centrale de sorte à obtenir une phase locale de porteuse gauche.

- il comprend un générateur de codes locaux,
- il comprend un générateur de codes locaux gauche et un générateur de codes locaux droite,
- il comprend un intégrateur numérique de phase de code droite et un intégrateur numérique de phase de code gauche, un générateur de codes locaux gauche et un générateur de codes locaux droite, un intégrateur numérique de phase de porteuse centrale gauche et intégrateur numérique de phase de porteuse centrale droite.

La présente invention sera mieux comprise à la lecture de la description détaillée d'un mode de réalisation, pris à titre d'exemple non limitatif et illustré par le dessin annexé, sur lequel :

- la figure 1, déjà décrite, est un ensemble de diagrammes de signaux sans défauts reçus d'un satellite de radionavigation du type BPSK,
- la figure 2, déjà décrite, est un ensemble de diagrammes de signaux sans défauts reçus d'un satellite de radionavigation du type à porteuse à double décalage de porteuse,
- les figures 3a et 3b, déjà décrites, sont des diagrammes de signaux du type de ceux de la figure 2, mais affectés de défauts

- la figure 4, déjà décrite, est un bloc diagramme d'un récepteur, plus particulièrement d'un canal de traitement numérique d'un récepteur de radionavigation connu
- les figures 5, 6, 7, 10b et 11 sont des blocs diagrammes de récepteurs, plus particulièrement de canaux de traitement numérique de récepteurs de radionavigation selon 5 modes différents de l'invention, aptes à mettre en oeuvre l'étape de lever d'ambiguïté de 5 modes différents de l'invention,
- la figure 8 représente le seuil de décrochage de la boucle de porteuse centrale en fonction du rapport signal sur bruit du signal reçu,
- la figure 9 est un bloc diagramme d'un récepteur, plus particulièrement d'un canal de traitement numérique d'un récepteur de radionavigation apte à mettre en oeuvre l'étape de poursuite d'un procédé de localisation selon l'invention.
- la figure 10a représente le spectre d'un signal AltBOC.

L'invention est décrite ci-dessous en référence à des signaux de radionavigation provenant de satellites, mais il est bien entendu qu'elle n'est pas limitée à cette seule application et qu'elle peut également être mise en oeuvre lorsque ces signaux proviennent de satellites fixes (« pseudolites », qui est une contraction de « pseudo-satellite », c'est-à-dire des émetteurs terrestres émettant des signaux semblables à ceux des satellites) ou mobiles (aéronef, véhicule terrestre, navire, etc.). En outre, le mobile comportant le récepteur de radionavigation du système de positionnement par satellites peut aussi bien être un aéronef qu'un véhicule terrestre ou un navire.

Le procédé de localisation d'un récepteur d'un système de positionnement par satellites comprend les mêmes étapes de recherche et de transition que le procédé selon l'art antérieur avant l'étape de lever d'ambiguïté. A l'issue de l'étape de transition, la variance sur le code est typiquement inférieure à 1 mètre.

On procède ensuite à une étape de lever d'ambiguïté réalisée selon un procédé de lever d'ambiguïté selon l'invention

Le procédé de lever d'ambiguïté diffère de celui de l'art antérieur en ce que, pour le canal d'indice i, les commandes de code CC sont des commandes en saut et sont générées à la fois à partir d'estimations instantanées d'erreurs de code $\varepsilon_{0i}$ et à partir d'estimations instantanées de l'erreur de phase de sous-porteuse $\Delta\varphi_{0i}$ calculée à partir de signaux issus des sorties complexes des voies de corrélation droite $ZS_{AD}$, $ZS_{PD}$, $ZS_{RD}$ et gauche $ZS_{AG}$, $ZS_{PG}$, $ZS_{RG}$. Plus précisément, la génération des commandes du correcteur de code est effectuée sur la base d'un filtre de Kalman à deux états recalé à partir d'estimations $\varepsilon_{0i}$ de l'erreur de code et d'estimations $\Delta\varphi_{0i}$ de l'erreur de phase de sous-porteuse.

L'erreur de phase de sous-porteuse $\Delta\varphi_i$ représente l'écart entre la phase de sous-porteuse locale et la phase de sous-porteuse reçue.

La moitié de la différence entre les phases de porteuses des composantes gauche et droite du signal reçu étant, par définition, la phase de sous-porteuse reçue, alors l'erreur de phase de sous-porteuse $\Delta\varphi_i$ est égale à la moitié du déphasage entre les composantes gauche et droite après démodulation par les porteuses locales gauche et droite locales. Les erreurs de phase de porteuse gauche $\Delta\varphi_{PG}$ et droite $\Delta\varphi_{PD}$ (observables sur les phases des composantes gauche et droite après démodulation en sortie des corrélateurs) sont les suivantes:

$$\Delta\varphi_{pG} = \varphi_{pG} - \varphi_{pGL}$$

$$\Delta\varphi_{pD} = \varphi_{pD} - \varphi_{pDL}$$

Les phases de sous-porteuses reçues $\varphi_{sp}$ et locale $\varphi_{spL}$ sont données par :

$$\varphi_{sp} = ( \varphi_{pG} - \varphi_{pG} )/2$$

$$\varphi_{spL} = ( \varphi_{pGL} - \varphi_{pDL} )/2$$

D'où :

$$\Delta\varphi_i = \varphi_{sp} - \varphi_{spL} = ( \Delta\varphi_{pD} - \Delta\varphi_{pG} )/2$$

où $\varphi_{sp}$, $\varphi_{pG}$ et $\varphi_{pD}$ sont respectivement les phases de sous-porteuse et de porteuse des composantes gauche et droite du signal reçu.

A cet effet, les canaux de traitement numérique d'un récepteur selon l'invention sont modifiés par rapport à un récepteur de l'art antérieur.

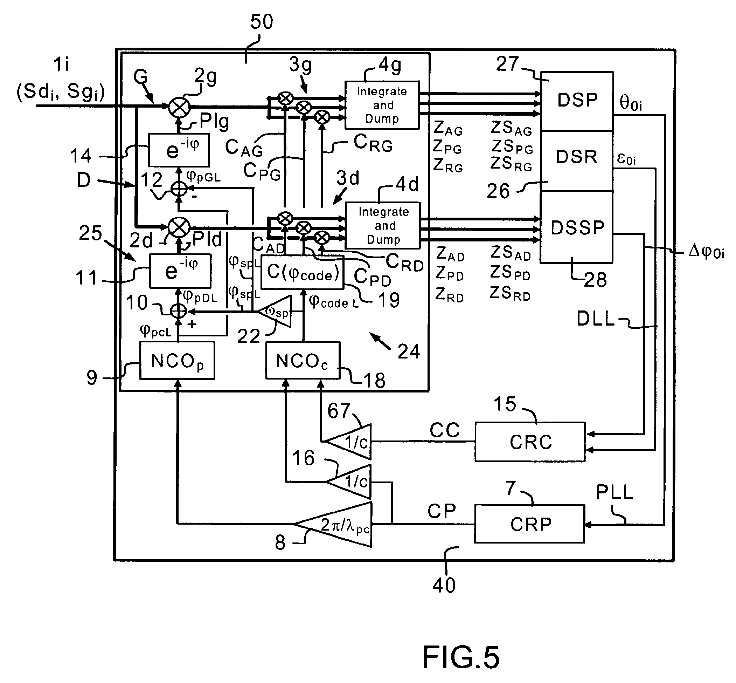

On a représenté sur la figure 5 un exemple de bloc-diagramme de voies de réception numérique d'un récepteur (à raison d'une voie de réception numérique par satellite reçu, ce qui est également valable pour les figures...) d'un récepteur de signaux GNSS apte à mettre en oeuvre l'étape de lever d'ambiguïté du procédé de localisation selon un premier mode de réalisation de l'invention.

Les éléments communs aux récepteurs de la figure 4 et de la figure 5 présentent des références numériques identiques et ne seront pas décrits à nouveau. Les fonctions réalisées par ces différents éléments et communs à l'art antérieur et à l'étape de lever d'ambiguïté selon l'invention ne seront pas décrites à nouveau.

On a modifié le canal logiciel 40 du récepteur selon l'invention.

Outre un discriminateur de code DSR, 26, et un discriminateur de phase de porteuse centrale DSP, 27, le canal logiciel 40 comprend un discriminateur de phase de sous-porteuse DSSP, 28. Le discriminateur de phase de sous-porteuse DSSP, 28 calcule, à partir des signaux issus des sorties complexes ponctuelles des voies de corrélation droite $ZS_{PD}$ et gauche $ZS_{PG}$, des estimations instantanées $\Delta\varphi_{0i}$ des erreurs de phase de sous-porteuse exprimées en radians.

Les estimations instantanées $\Delta\varphi_{0i}$ des erreurs de phase de sous-porteuse $\Delta\varphi_i$ et les estimations instantanées $\varepsilon_{0i}$ des erreurs de code $\varepsilon_i$ sont transmises, à la fréquence de l'intégrateur du circuit de corrélation, au correcteur de code CRC 15, qui génère des commandes de code

Le correcteur de code CRC 15 est réalisé sur la base d'un filtre de Kalman à deux états recalé à partir estimations $\varepsilon_{0i}$ des erreurs de code et des estimations $\Delta\varphi_{0i}$ des erreurs de phase de sous-porteuse. La structure du filtre fait que l'on peut dire que la boucle de code est aidée par une boucle de phase de sous-porteuse.

Le correcteur de boucle de code CRC, 15, est basé sur un filtre de Kalman à deux états dont un premier état $X_n$ (1) représente le différentiel de phase $\delta\varphi_i$ ramené en unité de distance et un second état $X_n$ (2) représente l'erreur de code $\varepsilon_i$, elle aussi exprimée en unité de distance. Le différentiel de phase $\delta_{\varphi i}$ est le différentiel de phase induit par les voies analogiques sur un signal reçu depuis un satellite d'indice i.

Pour un satellite d'indice i, l'erreur de phase de sous-porteuse $\Delta\varphi_i$ est égale à l'erreur de code $\varepsilon_i$ exprimée en radian relativement à la longueur d'onde de sous-porteuse $\lambda_{sp}$ ajoutée au différentiel de phase $\delta\varphi_i$.

$$\Delta\varphi_i = ( 2\pi / \lambda_{sp} ).\varepsilon_i + \delta\varphi_i$$

Le différentiel de phase $\delta\varphi_i$ est égal au à la moitié du déphasage induit par les voies analogiques du récepteur ou du satellite entre les composantes droite et gauche du signal reçu. Lorsque l'erreur de code $\varepsilon_i$ est nulle, c'est-à-dire lorsque la position du code local est asservie sur le maximum d'énergie de la somme des deux signaux issus des sorties complexes de voies de corrélation gauche et droite, l'écart de phase $\Delta\varphi_{pD} - \Delta\varphi_{pG}$ entre les deux composantes gauche et droite en sortie de voies de corrélation est alors égal au double du différentiel de phase $\delta\varphi_i$.

Nous allons maintenant décrire plus précisément les calculs effectués dans les différents blocs du récepteur selon l'invention. Dans la suite de la description, nous utiliserons les notations suivantes :

\* : conjugué

$$( Ae^{j\theta} )^* = Ae^{-j\theta}$$

arg : argument complexe

$$\arg( Ae^{j\theta} ) = \theta$$

Re : partie réelle

$$Re(Ae^{j\theta}) = A.\cos(\theta)$$

Im : partie Imaginaire

$$Im(Ae^{j\theta}) = A.\sin(\theta)$$

Le vecteur d'état du filtre de Kalman est défini de la manière suivante à l'instant n :

$$X_n = \begin{bmatrix} X_n(1) \\ X_n(2) \end{bmatrix} \qquad \text{(en mètres)}$$

Le filtre d'état est initialisé de la manière suivante :

Initialisation de l'état :

$$X_{0/0 \; corrigé} = \begin{bmatrix} 0 \\ 0 \end{bmatrix}$$

Initialisation de la matrice de covariance :

$$P_{0/0} = \begin{bmatrix} \lambda_{sp}^2 & 0 \\ 0 & (\lambda_{code}/2)^2 \end{bmatrix}$$

Les valeurs de $\lambda_{sp}$ et $\lambda_{code}$ sont initialisées à partir des valeurs calculées lors de la phase de transition.
Le filtre se propage de la manière suivante :

$$F = \begin{bmatrix} 1 & 0 \\ 0 & 1 \end{bmatrix} \qquad Q = \begin{bmatrix} 0 & 0 \\ 0 & q \end{bmatrix}$$

Propagation de l'état :

$$X_{n/n-1} = F.X_{n-1/n-1 \; corrigé}$$

$X_{n-1/n-1}$ *corrigé* est l'état précédent après la correction de code.
Recalage de la matrice de covariance :

$$P_{n/n-1} = F.P_{n-1/n-1}.F^T + Q$$

On va maintenant décrire les calculs réalisés par les discriminateurs dans le premier mode de réalisation de l'invention en fonction des signaux issus des sorties complexes des voies de corrélation. Dans le premier mode de réalisation de l'invention, les signaux issus des sorties complexes des voies de corrélation droite $ZS_{AD}$, $ZS_{PD}$, $ZS_{RD}$ et gauche $ZS_{AG}$, $ZS_{PG}$, $ZS_{RG}$ utilisés par les discriminateurs de phase de sous-porteuse, de porteuse et de code sont égaux aux sorties complexes des voies de corrélation droite $Z_{AD}$, $Z_{PD}$, $Z_{RD}$ et gauche $Z_{AG}$, $Z_{PG}$, $Z_{RG}$.

Le discriminateur de phase de sous-porteuse DSSP, 28 et le correcteur de boucle de code CRC, 15, basé à la fois sur l'estimation instantanée de l'erreur de code $\varepsilon_{0i}$ et l'estimation instantanée de l'erreur de phase de sous-porteuse $\Delta\varphi_{0i}$, forment une boucle de phase de sous-porteuse. Le discriminateur de phase de sous-porteuse d'un canal de traitement numérique d'indice i, fait une estimation $\Delta\varphi_{0i}$ de l'erreur de phase de sous-porteuse.

Le discriminateur de phase de sous-porteuse dit discriminateur de phase de sous-porteuse « linéaire » calcule une estimation instantanée de la moitié de la différence de phase entre les deux composantes droite et gauche, à partir des signaux issus des sorties complexes ponctuelles de voies de corrélation, de la manière suivante :

$$\Delta\varphi_{0i} = \tfrac{1}{2} \cdot \arg{}_{]-\pi,\pi]} ( ZS_{PD} \cdot ZS_{PG}{}^\star )$$

Le discriminateur de phase de sous-porteuse est, en variante, un discriminateur dit en "sinus", il calcule une estimation instantanée la moitié de la différence de phase entre les deux composantes droite et gauche de la manière suivante:

$$\Delta\varphi_{0i} = \tfrac{1}{2} \cdot \mathrm{Im}( ZS_{PD} \cdot ZS_{PG}{}^\star ) / ( \| ZS_{PD} \| \cdot \|ZSP_{G}\| )$$

Le discriminateur en sinus est plus robuste à faible C/N0 (rapport signal sur bruit), mais ne doit être utilisé que si l'écart de phase de code entre les deux composantes est petit, à cause de la non linéarité.

Il est possible d'utiliser simultanément, lors de la phase de lever d'ambiguïté, un discriminateur du type linéaire puis un discriminateur du type sinus, lorsque le filtre a déjà commencé à converger, par exemple, lorsque l'erreur de code est inférieure ou égale à 1 m.

Variance du discriminateur :

$$\sigma^2{}_{\varepsilon\,\Delta\varphi oi} = \left(\frac{1}{C/N_0.T}\right)$$

T est la durée d'intégration dans les intégrateurs 4g, 4d. Ce temps est typiquement de 20ms à 50Hz.

Dans la boucle de code asservissant la position des codes locaux avec celle des codes reçus, le correcteur de boucle de code CRC, 15, basé sur le filtre de Kalman se recale sur des estimations de l'erreur de phase de sous-porteuse $\Delta\varphi_{0i}$ de la manière suivante :

Observation :

$$Z_{sp} = \left(\frac{\lambda_{sp}}{2\pi}\right) \cdot \Delta\varphi_{0i}$$

Variance de l'observation :

$$r_{sp} = \left(\frac{\lambda_{sp}}{2\pi}\right)^2 \cdot \sigma^2{}_{\Delta\varphi 0i}$$

Innovation :

$$Y_{sp}{}' = Z_{sp} - H_{sp} X_{n/n-1}$$

$$Y_{sp} = \mathrm{modulo}\,{}_{\frac{1}{2}\lambda sp} ( Y_{sp}{}' + \tfrac{1}{4}\lambda_{sp} ) - \tfrac{1}{4}\lambda_{sp}$$

Matrice d'observation :

$$H_{sp} = \begin{bmatrix} 1 & 1 \end{bmatrix}$$

Gain de recalage :

$$K_{sp} = P_{n/n-1}.H_{sp}(H_{sp}.P_{n/n-1}.H_{sp}^{T} + r_{sp})^{-1}$$

Recalage de l'état :

$$X_{n/n\ sp} = X_{n/n-1} + K_{sp}.Y_{sp}$$

Recalage de la matrice de covariance :

$$P_{n/n\ sp} = (I - K_{sp}H_{sp})P_{n/n-1}$$

Le discriminateur code DSR, 26, calcule une estimation $\varepsilon_{0i}$ de l'erreur de code $\varepsilon_i$, exprimée en mètres, représentative du décalage entre la position du code local et du code du signal reçu de la manière suivante :

$$\varepsilon_{0i} = \{ Re[\ ZS_{\Delta G}.\ ZS_{P G}^{*}\ ] + Re[\ ZS_{\Delta D}.\ ZS_{P D}^{*}\ ]\ \}\ /\ \mu$$

Avec :

$\mu$, la pente du discriminateur

Préalablement au calcul de l'estimation instantanée $\varepsilon_{0i}$ de l'erreur de code $\varepsilon_i$, le discriminateur a réalisé une soustraction entre les voies avance et retard qui est effectuée sur les sorties complexes avance et retard des canaux de corrélation gauche et droite.

$$ZS_{\Delta G} = ZS_{A G} - ZS_{R G}$$

$$ZS_{\Delta D} = ZS_{A D} - ZS_{R D}$$

En variante, la soustraction entre les voies avance et retard est réalisée sur les codes avance et retard dans les canaux de corrélation droite et gauche, de sorte que les signaux, issus des sorties complexes des voies de corrélation (qui sont les sorties complexes des voies de corrélation) sont directement égales aux soustractions gauche et droite $ZS_{\Delta G}$, $ZS_{\Delta D}$.
Dans ce mode de réalisation, on dit que le discriminateur de code est non cohérent car on réalise, préalablement au calcul de l'erreur de code, une somme non cohérente des voies avance et retard. On réalise donc, lors de la phase de lever d'ambiguïté, une poursuite non cohérente du code.
La variance du discriminateur est la suivante :

$$\sigma^2_{\varepsilon\ code} = (\frac{\lambda_{code}}{\mu})^2 (\frac{\nu}{2.C/N_0.T})$$

$\mu$ = pente du discriminateur
$\nu$ : Paramètre du discriminateur

Le filtre de Kalman prend en compte les estimations instantanées de l'erreur de code $\varepsilon_{0i}$, calculées par le discriminateur de code, de la manière suivante :

Observation :

$$Z_{code} = \varepsilon_{0i}$$

Variance de l'observation :

$$r_{code} = \sigma^2_{\varepsilon\ code}$$

Matrice d'observation :

$$H_{code} = \begin{bmatrix} 0 & 1 \end{bmatrix}$$

Gain de recalage :

$$K_{code} = P_{n/n\ sp}.H_{code}(H_{code}.P_{n/n\ sp}.H^T_{code} + r_{code})^{-1}$$

Recalage de l'état :

$$X_{n/n} = X_{n/n\ sp} + K_{code}(Z_{code} - H_{code}X_{n/n\ sp})$$

Recalage de la matrice de covariance:

$$P_{n/n} = (I - K_{code}H_{code})P_{n/n\ sp}$$

Le discriminateur de porteuse DSP,27 est, dans un premier mode de réalisation, du type "arctangente" et calcule une estimation de l'erreur de phase de porteuse centrale $\theta_{0i}$ de la manière décrite ci-dessous.

Il calcule tout d'abord une estimation de l'erreur de phase de porteuse centrale sur les composantes droite $\theta_{0iD}(n)$ et gauche $\theta_{0iG}(n)$ puis fait la moyenne de ces estimations pour obtenir l'estimation de l'erreur de phase de porteuse centrale du signal reçu.

$$\theta_{0i\ G}(n) = arg_{]-\pi,\pi]}(Z_{PG}(n))$$

$$\theta_{0i\ D}(n) = arg_{]-\pi,\pi]}(Z_{PD}(n))$$

$$\theta_{0i}(n) = (\theta_{0iG}(n) + \theta_{0iD}(n))/2$$

Dans un second mode de réalisation, le discriminateur est du type « Enrouleur » ou « Etendu ». Il réalise également une moyenne des estimations des erreurs de phase sur les composantes droite $\theta_{0iD}(n)$ et gauche $\theta_{0iG}(n)$, le calcul des erreurs de phase sur les composantes droite et gauche étant réalisé différemment.

$$\Delta\theta_{0iG}(n) = arg_{]-\pi,\pi]}(ZS_{PG}(n).ZS_{PG}(n-1)^*)$$

$$\Delta\theta_{0iD}(n) = \arg_{]-\pi,\pi]} ( ZS_{PD}(n) . ZS_{PD}(n-1)^* )$$

$$\theta_{0iG}(n) = \theta_{0iG}(n-1) + \Delta\theta_{0iG}(n)$$

$$\theta_{0iD}(n) = \theta_{0iD}(n-1) + \Delta\theta_{0iD}(n)$$

$$\theta_{0i}(n) = ( \theta_{0iG}(n) + \theta_{0iD}(n) )/2$$

Dans ces modes de réalisation, on dit que le discriminateur de phase de porteuse est non cohérent car il ne réalise pas, préalablement au calcul de l'erreur de phase de porteuse centrale une somme cohérente des sorties complexes des voies de corrélation gauche et droite. On réalise donc, lors de la phase de lever d'ambiguïté, une poursuite non cohérente de la phase de porteuse centrale.

Le correcteur de code CRC 15, génère des commandes de code CC, afin de produire un nouveau signal local réduisant l'erreur de code.

Tout d'abord, le correcteur de code calcule une correction à apporter à la phase de code Correction code (n) définie de la manière suivante :

Correction code(n) = $X_{n/n}$ (2)

$$X_{n/n\ corrigé} = X_{n/n} - \begin{bmatrix} 0 \\ Correction\ code \end{bmatrix}$$

Les commandes de code CC générées par le correcteur de code CRC 15 sont des commandes en saut de code Scode.

CC (n) = Scode (n) = Correction code (n), exprimé en mètres.

Le correcteur de porteuse CRP, 7, produit des commandes de porteuse CP qui sont des commandes en vitesse.

Tout d'abord, le correcteur de porteuse CRP, 7, fait les calculs suivants :

$$\left\{ \begin{array}{l} A_{porteuse}(n+1) = A_{porteuse}(n) + T. K3_{porteuse} . \theta_{0i}(n) \\ V_{porteuse}(n+1) = V_{porteuse}(n) + T. A_{porteuse}(n) + T. K2_{porteuse} . \theta_{0i}(n) \\ C_{porteuse}(n+1) = T. V_{porteuse}(n) + T. K1_{cporteuse} . \theta_{0i}(n) \end{array} \right.$$

Les commandes en vitesse de porteuse CP sont définies comme suit :

$$CP(n) = C_{porteuse}(n+1) / T \qquad (m/s)$$

Le correcteur de porteuse CRC, 7, transmet à l'intégrateur numérique de phase de porteuse centrale NCOp 9 les commandes en vitesse de porteuse CP via un amplificateur 8 qui amplifie les commandes de $2\pi/\lambda_{pc}$.

Le correcteur de porteuse transmet également à l'intégrateur numérique de phase de code NCOc 18 les commandes en vitesse de porteuse CP via un amplificateur 16 qui amplifie les commandes de porteuse de 1/c de sorte que la boucle de porteuse aide la boucle de code.

Un amplificateur 17 amplifie les commandes de code en saut de 1/c.

Le fait d'utiliser, dans la boucle de code, un filtre de Kalman recalé sur un discriminateur de sous-porteuse permet de compenser la divergence entre la phase du code et celle de la phase de porteuse centrale. En effet, dans un procédé de l'art antérieur comme décrit en référence à la figure 4, la boucle de code est aidée par la boucle de phase de porteuse centrale et le correcteur de code moyenne les estimations instantanées de l'erreur de code qui lui sont fournies toutes les 20 ms pour réduire le bruit sur ces estimations et fournir des commandes de code pour la correction des codes locaux.

Or, du fait de la propagation du signal émis par un satellite dans la ionosphère, la phase du code et la phase de la porteuse centrale divergent car le retard de phase de la porteuse centrale, induit par la ionosphère, est différent du retard de phase induit entre les composantes droite et gauche.

On doit donc intégrer les estimations de l'erreur de code sur des temps limités (de l'ordre de la minute) dans le correcteur de code sinon, le code local aidé par la porteuse centrale diverge par rapport au code reçu. La phase du code local est bruitée et les risques de faux accrochage sur un pic secondaire en mode poursuite sont non négligeables du fait de l'intégration sur un temps limité.

La phase de la sous-porteuse reçue et la phase du code reçu ne présentant pas de divergence due aux effets ionosphériques, le fait d'aider la boucle de code au moyen de la boucle de sous-porteuse, dans le filtre de Kalman, permet de compenser la divergence entre le code et la phase de porteuse. Ainsi à court terme la phase du code local suit les évolutions de la mesure de phase de sous-porteuse, précise mais ambiguë, et à long terme elle converge vers le maximum des moyennes des fonctions d'autocorrélation Gauche et Droites obtenue après démodulation BPSK. Le filtre de Kalman peut donc se fier à l'aide de la sous-porteuse pour moyenner les estimations des erreurs de code sur un temps très long bien au delà de la minute sans être perturbé par la divergence de la phase de porteuse centrale. Ce temps de filtrage très long permet de moyenner les erreurs de code dues au bruit thermique et aux multi-trajets. Ainsi l'écart-type de l'erreur de code diminue au fur et à mesure que le filtre engrange des mesures, jusqu'à devenir suffisamment petit pour permettre un passage en poursuite en BOC reconstitué sur le bon pic, sans faux accrochage.

Cela permet de limiter les risques de faux accrochage et les risques de décrochages lors du passage en phase de poursuite et d'améliorer la précision des mesures de pseudo-distances.

Dans un second mode de réalisation préférentiel de l'étape de lever d'ambiguïté selon l'invention, lors de l'étape de génération des commandes de code, on calcule pour un satellite d'indice i, une estimation filtrée $\Delta\varphi_{i filtrée}$ de l'erreur de phase de sous-porteuse et on compense la différence de phase entre les composantes gauche et droite en sortie des voies de corrélation qui est égale au double de l'erreur de phase de sous-porteuse $\Delta\varphi_i$.

L'estimation filtrée $\Delta\varphi_{i filtrée}$ de l'erreur de phase de sous-porteuse est obtenue en sommant l'estimation filtrée $\varepsilon_i$ filtrée de l'erreur de code, exprimée en radian, relativement à la longueur d'onde de sous-porteuse $\lambda_{SP}$, et de l'estimation filtrée $\delta\varphi_i$ filtrée du différentiel de phase, fournies par le filtre de Kalman:

$$\Delta\varphi_{i\ filtrée} = ( 2\pi\ / \lambda_{SP} ).\varepsilon_{i\ filtrée} + \delta\varphi_{i\ filtrée}$$

$$\varepsilon_{i\ filtrée} = X_{n/n}(2)$$

$$\delta\varphi_{i\ filtrée} = ( 2\pi\ / \lambda_{SP} ) . X_{n/n}(1)$$

Dans une première variante de ce mode de réalisation, on compense la différence de phase entre les deux composantes gauche et droite entre l'étape de génération des commandes de code et l'étape de génération des nouvelles porteuses complexes locales droite Plg et gauche Pld et des répliques des codes locaux droites $C_{AD}$, $C_{PD}$, $C_{RD}$ et gauches $C_{AG}$, $C_{PG}$, $C_{RG}$.

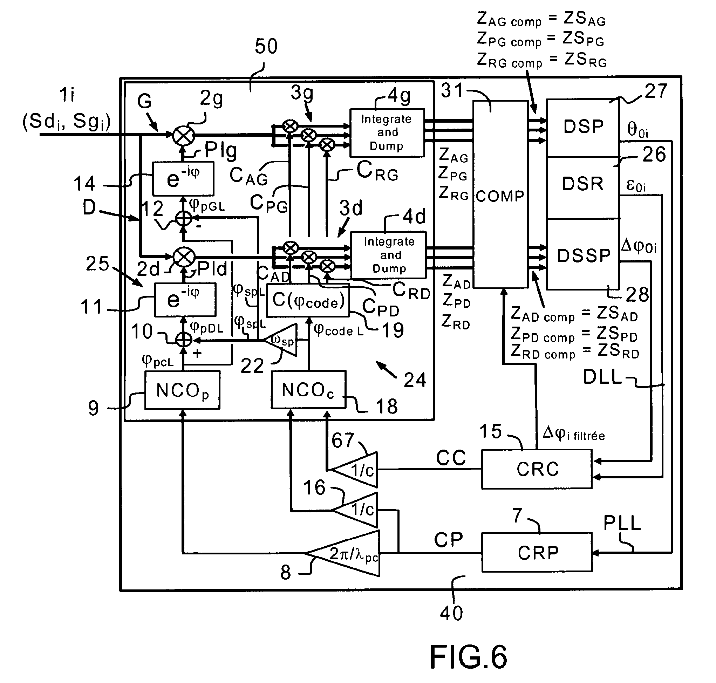

On a représenté, sur la figure 6, un exemple de bloc-diagramme d'un canal de réception numérique d'un récepteur de signaux GNSS apte à mettre en oeuvre l'étape de lever d'ambiguïté selon le second mode de réalisation de l'invention.

Les éléments communs aux récepteurs de la figure 5 et de la figure 6 présentent des références numériques identiques et ne seront pas décrits à nouveau. Les fonctions réalisées par ces différents éléments et communs à l'art antérieur et à l'étape de lever d'ambiguïté selon l'invention ne seront pas décrites à nouveau.

Le correcteur de boucle de code CRC, 15, fait une estimation filtrée de l'erreur de phase de sous-porteuse $\Delta\varphi_i$ à partir des estimations instantanées des erreurs de code et de sous-porteuse. On dit que l'estimation $\Delta\varphi_{i filtrée}$ est une estimation filtrée car le filtre de Kalman moyenne les estimations des erreurs de code et de phase de sous-porteuse fournies par les discriminateurs toutes les 20 ms avant de fournir l'estimation filtrée de l'erreur de phase de sous-porteuse. Cela permet de filtrer les biais sur les estimations des erreurs de code et de phase de sous-porteuse dus aux multi-trajets et au bruit thermique.

Le correcteur de boucle de code fait une estimation filtrée de l'erreur de phase de sous-porteuse d'un satellite d'indice i de la manière suivante :

$$\Delta\varphi_{ifiltrée} = (\frac{2\pi}{\lambda_{sp}}).H_{sp}.X_{n/n\,sp}$$

Le récepteur comprend un moyen de compensation de la différence de phase entre les composantes droite et gauche en sortie des voies de corrélation. Le moyen de compensation est un compensateur COMP, 31, recevant l'estimation filtrée $\Delta\varphi_i$ filtrée de l'erreur de phase de sous-porteuse ainsi que les sorties complexes des voies de corrélation droite $Z_{AD}$, $Z_{PD}$, $Z_{RD}$ et gauche $Z_{AG}$, $Z_{PG}$, $Z_{RG}$. Le compensateur utilise la méthode de rotation complexe différentielle pour faire la compensation par rotation complexe différentielle d'une phase égale à l'estimation de la différence de phase de sous-porteuse.

Ainsi, on obtient, en entrée des discriminateurs, des sorties des voies de corrélation compensées respectivement droite $Z_{ADcomp}$, $Z_{PDcomp}$, $Z_{RDcomp}$ et gauche $Z_{AGcomp}$, $Z_{PGcomp}$, $Z_{RGcomp}$. Ces valeurs sont calculées pour chaque canal d'indice i. Pour plus de clarté, on ne met par d'indice i sur ces valeurs.

$$Z_{AGcomp} = e^{+j\Delta\varphi_{ifiltrée}} . Z_{AG} \qquad\qquad Z_{ADcomp} = e^{-j\Delta\varphi_{ifiltrée}} . Z_{AD}$$

$$Z_{PGcomp} = e^{+j\Delta\varphi_{ifiltrée}} . Z_{PG} \qquad\qquad Z_{PDcomp} = e^{-j\Delta\varphi_{ifiltrée}} . Z_{PD}$$

$$Z_{RGcomp} = e^{+j\Delta\varphi_{ifiltrée}} . Z_{RG} \qquad\qquad Z_{RDcomp} = e^{-j\Delta\varphi_{ifiltrée}} . Z_{RD}$$

En sortie du compensateur COMP , les signaux issus des sorties complexes des voies de corrélation droite $ZS_{AD}$, $ZS_{PD}$, $ZS_{RD}$ et gauche $ZS_{AG}$, $ZS_{PG}$, $ZS_{RG}$ sont égaux respectivement aux les sorties complexes compensées droite $Z_{ADcomp}$, $Z_{PDcomp}$, $Z_{RDcomp}$ et gauche $Z_{AGcomp}$, $Z_{PGcomp}$, $Z_{RGcomp}$.

Ces sorties sont transmises aux discriminateurs de code DSR, 26, de phase de porteuse DSP, 27, et de phase de sous-porteuse DSSP, 28 pour estimer les erreurs respectives de code, de phase de porteuse centrale et de phase de sous-porteuse.

Ce mode de réalisation présente l'avantage de ne pas nécessiter de modification des voies matérielles 50 des voies numériques du récepteur par rapport au mode de réalisation représenté sur la figure 5.

En variante, on réalise la compensation pour un satellite i, entre l'étape de génération des commandes de code CC et de correcteur de porteuse centrale CP et l'étape de génération des nouvelles porteuses locales complexes droite Plg et gauche Pld. Le moyen de compensation est, dans cette variante, un additionneur 36 ajoutant l'estimation filtrée $\Delta\varphi_i$ filtrée de l'erreur de phase de sous-porteuse à la phase locale de sous-porteuse, obtenue en amplifiant, de la pulsation de sous-porteuse $\omega sp$ la phase de code local par un amplificateur 22.

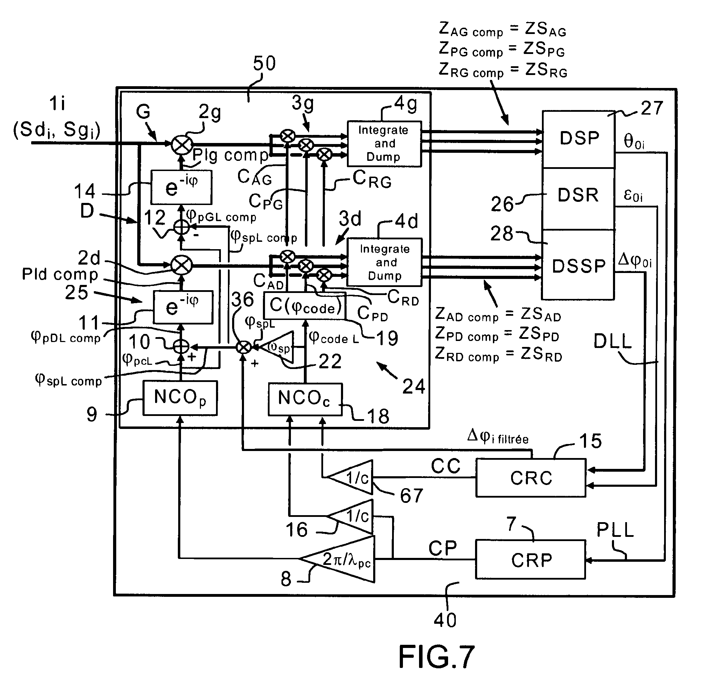

On a représenté sur la figure 7 un exemple de bloc-diagramme de voies de réception numérique d'un récepteur de signaux GNSS (à raison d'une voie de réception numérique par satellite reçu) apte à mettre en oeuvre l'étape de lever d'ambiguïté selon une variante du second mode de réalisation de l'invention.

Les éléments communs avec la figure 5 comportent les mêmes références numériques et ne seront pas décrits à nouveau.

Le correcteur de boucle de code CRC, 15 fournit une estimation filtrée $\Delta\varphi_{i\,filtrée}$ de l'erreur de phase de sous-porteuse $\Delta\varphi i$ à un additionneur 36 qui ajoute cette estimation à la phase de sous-porteuse locale.

La phase de sous-porteuse locale compensée $\varphi spLcomp$ est transmise aux additionneurs droite 10 et gauche 13 qui retranchent et respectivement ajoutent celle-ci à la phase de porteuse centrale générée par l'intégrateur numérique de phase de porteuse centrale NCOp, 9 de sorte à obtenir des phases de porteuses locales compensées gauche $\varphi pGLcomp$ et droite $\varphi pDLcomp$ et à produire des porteuses locales gauche et droite compensées Plgcomp et Pldcomp.

Ainsi, les sorties complexes des voies de corrélation dans la variante du second mode de réalisation de l'invention, les signaux issus des sorties complexes des voies de corrélation droite $ZS_{AD}$, $ZS_{PD}$, $ZS_{RD}$ et gauche $ZS_{AG}$, $ZS_{PG}$, $ZS_{RG}$ sont égaux respectivement aux sorties complexes compensées droite $Z_{ADcomp}$, $Z_{PDcomp}$, $Z_{RDcomp}$ et gauche $Z_{AGcomp}$, $Z_{PGcomp}$, $Z_{RGcomp}$.

Boucle de phase de sous-porteuse :

Le discriminateur de phase de sous-porteuse DSSP, 28 du type linéaire réalise l'estimation instantanée de l'erreur de phase de sous-porteuse $\Delta\varphi_{0i}$ à partir des sorties complexes ponctuelles compensées de voies de corrélation et de l'estimation filtrée de l'erreur de phase de sous-porteuse de la manière suivante :

$$\Delta\varphi_{0i} = \tfrac{1}{2} \cdot \arg_{]-\pi,\pi]} ( Z_{PD\ comp} \cdot Z_{PG\ comp}{}^{*} ) + \Delta\varphi_{i\ filtrée}$$

Le discriminateur de phase de sous-porteuse du type "sinus" réalise l'estimation instantanée de l'erreur de phase de sous-porteuse $\Delta\varphi_{0i}$ de la manière suivante :

$$\Delta\varphi_{0i} = \tfrac{1}{2} \cdot Im( Z_{PD\ comp} \cdot Z_{PG\ comp} ) / ( \| Z_{PD\ comp} \| \cdot \| Z_{PG\ comp} \| ) + \Delta\varphi_{i\ filtrée}$$

Boucle de phase de porteuse centrale :

Préalablement au calcul de l'estimation de l'erreur de phase de porteuse centrale $\theta_{0i}$, on somme de façon cohérente les sorties ponctuelles des voies de corrélation droite et gauche compensées. On dit que le discriminateur de phase de porteuse centrale est cohérent. C'est le fait de compenser la différence de phase entre les deux composantes droite et gauche qui nous permet de réaliser une sommation cohérente des deux voies de corrélation. Si on ne faisait pas cette compensation on risquerait de sommer de manière destructives les sorties complexes des voies gauche et droite et de dégrader le rapport signal sur bruit voire de perdre le signal satellite.

La somme cohérente $Z_P$ cohérent des sorties des voies de corrélation ponctuelles compensées est réalisée de la manière suivante :

$$Z_{Pcohérent}(n) = Z_{PGcomp}(n) + Z_{PDcomp}(n)$$

Le calcul de l'estimation de l'erreur de phase de porteuse est ensuite réalisé, à partir de la somme cohérente $Z_{Pcohérent}$ des sorties des voies de corrélation ponctuelles compensées, de la manière suivante :

Discriminateur BPSK :

$\theta_{0i}(n) = \arg_{]-\pi,\pi]}( Z_{Pcohérent}(n))$ si le signal n'est pas modulé par des données (voie pilote)

$\theta_{0i}(n) = \arg_{]-\pi/2,\pi/2]}( Z_{Pcohérent}(n) )$ si le signal est modulé par des données

Discriminateur DBPSK ou « Enrouleur » ou « Entendu » :

$\Delta\theta_{0i}(n) = \arg_{]-\pi,\pi]}( Z_{Pcohérent}(n) \cdot Z_{Pcohérent}(n-1)^{*})$ si le signal n'est pas modulé par des données (voie pilote)

$\Delta\theta_{0i}(n) = \arg_{]-\pi/2,\pi/2]}( Z_{Pcohérent}(n) \cdot Z_{Pcohérent}(n-1)^{*})$ si le signal est modulé par des données

$$\theta_{0i}(n) = \theta_{0i}(n-1) + \Delta\theta_{0i\ i}(n)$$

Une boucle de phase de porteuse centrale comprenant un discriminateur de phase de cohérente, réalise une poursuite cohérente de la porteuse centrale du signal démodulé en mode BPSK.

La poursuite cohérente de la phase de porteuse centrale dans l'étape de lever d'ambiguïté permet de rendre la boucle de phase de porteuse centrale plus robuste au bruit ou aux interférences.

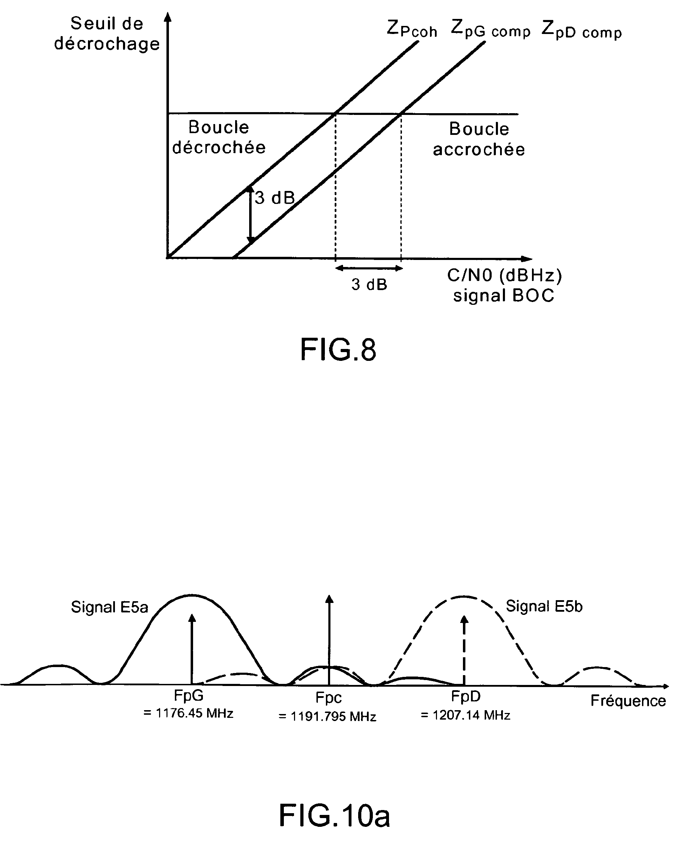

Sur la figure 8, on a représenté le seuil de décrochage de la boucle de porteuse centrale en fonction du rapport signal sur bruit C/N0 du signal BOC émis par un satellite.

La puissance du signal satellite est répartie pour moitié sur la composante gauche et pour moitié sur la composante droite. Le rapport signal sur bruit est donc inférieur de 3 dB sur les sorties complexes ponctuelles des voies de corrélation gauche et droite, compensées ou non, par rapport à la somme cohérente de ces sorties complexes.

Or, le seuil de décrochage de la boucle de phase de porteuse est donné par un rapport signal sur bruit minimal sur les sorties complexes ponctuelles gauche et droite pour le discriminateur non cohérent, et sur la somme cohérente de ces sorties complexes, pour le discriminateur cohérent.

Il résulte que le seuil de tenue de boucle est dégradé de 3dB dans le cas où on utilise un discriminateur de porteuse non cohérent par rapport au cas où on utilise un discriminateur de porteuse cohérent. Il en résulte une meilleure continuité du service en environnement hostile ou perturbé.

Boucle de code :

Le discriminateur de code est du type non cohérent comme décrit dans le premier mode de réalisation de l'invention.

En variante, le discriminateur de code de la boucle de code est du type pseudo-cohérent. Un discriminateur de code pseudo-cohérent réalise tout d'abord la somme cohérente voies avance et retard en sommant les sorties complexes ponctuelles compensées des canaux de corrélation droite et gauche.

En variante, la soustraction entre les voies avance et retard est réalisée sur les codes avance et retard dans les canaux de corrélation droite et gauche, de sorte que les signaux, issus des sorties complexes des voies de corrélation (qui sont les sorties complexes des voies de corrélation) sont directement égales aux soustractions gauche et droite $ZS_{\Delta G}$, $ZS_{\Delta D}$.

Plus précisément on calcule tout d'abord, en parallèle pour les canaux de corrélation droite et gauche, une soustraction des sorties complexes avance et retard compensées $Z_{\Delta G\ comp}$, $Z_{\Delta D\ comp}$ :

$$Z_{\Delta G\ comp} = Z_{A\ G\ comp} - Z_{R\ G\ comp}$$

$$Z_{\Delta D\ comp} = Z_{A\ D\ comp} - Z_{R\ D\ comp}$$

On calcule ensuite une somme cohérente $Z_{\Delta cohérent}$ des soustractions des sorties complexes avance et retard compensées gauche $Z_{\Delta G\ comp}$ et $Z_{\Delta D\ comp}$ droite ainsi qu'une somme cohérente $Z_{P\ cohérent}$ des sorties des voies de corrélation ponctuelles compensées de la manière suivante :

$$Z_{\Delta\ cohérent} = Z_{\Delta G\ comp} + Z_{\Delta D\ comp}$$

$$Z_{P\ cohérent} = Z_{P\ G\ comp} + Z_{P\ D\ comp}$$

Ensuite, le discriminateur de code pseudo-cohérent calcule l'erreur de code $\varepsilon_{0i}$.

$$\varepsilon_{0i} = \{ Re[\ Z_{\Delta\ cohérent} \cdot Z_{P\ cohérent}\ ^* \ ] \} / \mu$$

Le discriminateur de code pseudo-cohérent présente l'avantage d'être moins bruité que le discriminateur de code non-cohérent.

Dans les modes de réalisation représentés sur les figures 5 à 7, les voies de corrélation numériques de code et de porteuse centrale sont du type corrélateur étroit de sorte à produire des sorties complexes des voies de corrélation avance, retard et ponctuelles gauche et droite $Z_{AD}$, $Z_{PD}$, $Z_{RD}$ et gauche $Z_{AG}$, $Z_{PG}$, $Z_{RG}$.

Dans ces voies de corrélation, le générateur de codes locaux 19 produit des répliques locales du code d'étalement pour la composante locale droite Avance $C_{AD}$ et Retard $C_{RD}$ respectivement en avance et en retard d'un délai d par rapport à la composante Ponctuelle $C_{PD}$. Il en est de même pour les répliques du code d'étalement de la composante locale gauche.

En variante, les voies de corrélation numériques sont du type "Double Delta" de sorte à produire des sorties complexes des voies de corrélation très en avance, avance, retard, très en retard et ponctuelles $Z_{TAD}$, $Z_{AD}$, $Z_{PD}$, $Z_{RD}$, $Z_{TRD}$ et gauche $Z_{TAG}$, $Z_{AG}$, $Z_{PG}$, $Z_{RG}$, $Z_{TRG}$. Les voies très avance et très retard sont décalées d'un délai égal à 2.d par rapport à la composante ponctuelle.

Dans le cas du corrélateur en Double Delta, le discriminateur de phase de sous-porteuse et de porteuse sont inchangés par rapport aux modes de réalisation précédents.

Dans le discriminateur de code, c'est la soustraction des sorties complexes avance et retard compensées $Z_{\Delta\,Gcomp}$, $Z_{\Delta\,Dcomp}$ qui est modifié par rapport au mode de réalisation se basant sur un corrélateur de type étroit.

On calcule les deux soustractions de la manière suivante :

$$Z_{\Delta\,G\,comp} \;=\; -\,Z_{TA\,G\,comp}\;+\;2.Z_{A\,G\,comp}\;-\;2.Z_{R\,G\,comp}\;+\;Z_{TR\,G\,comp}$$

$$Z_{\Delta\,D\,comp} \;=\; -\,Z_{TA\,D\,comp}\;+\;2.Z_{A\,D\,comp}\;-\;2.Z_{R\,D\,comp}\;+\;Z_{TR\,D\,comp}$$

Un corrélateur en Double Delta permet de limiter l'erreur de code en boucle fermée en mode BPSK à 3 m, valeur inférieure à la distance entre deux pics (i.e. 5m). Lorsque la boucle a convergé l'erreur de code résiduelle est donc compatible d'une poursuite sur le bon pic principal de la fonction d'autocorrélation. L'utilisation d'un corrélateur en Double Delta permet donc de réduire les erreurs de multi-trajets.

Dans un mode préférentiel de l'invention, le corrélateur est, dans un premier temps, du type corrélateur étroit et, lorsque la variance de l'estimation de l'erreur de code est inférieure à un seuil prédéterminé, on utilise un corrélateur de Double Delta. L'utilisation d'un corrélateur étroit dans un premier temps permet de réduire suffisamment l'erreur de code pour être dans la plage de capture du Double Delta.

Les modes de réalisation du récepteur dans lesquels le compensateur est réalisé sous la forme d'un additionneur (voir figure 7) ou dans lesquels il n'y a pas de compensateur comme représenté (sur la figure 5) sont également adaptables au corrélateur en Double Delta.

Les étapes du procédé de lever d'ambiguïté sont répétées jusqu'à ce qu'un critère de convergence prédéterminé de la boucle de code soit vérifié. Une fois que le critère de convergence est vérifié, on passe à une phase de poursuite en mode BOC reconstitué.

Le critère de convergence est vérifié lorsque l'écart type de l'erreur du code estimé par le correcteur de code est inférieur à un seuil de code Seuil code prédéterminé. Le passage en poursuite est fait indépendamment pour les canaux de traitement numériques des différents satellites.

Ecart-type de l'erreur de code

L'écart type de l'erreur de code est calculé à partir de la matrice de covariance du filtre de Kalman

$$\sigma_{code\,i} = \sqrt{P_{n/n}(2,2)}$$

$$\text{Seuil}_{code} = \lambda_{code}\,/\,20$$

En variante, on définit un second critère de convergence qui combine un critère se basant sur l'erreur de code et un critère de cohérence. Le second critère de convergence est vérifié lorsque le premier critère de convergence est vérifié et lorsque le critère de cohérence est vérifié pour un pour un nombre de satellites prédéterminé. Le passage en mode poursuite se fait en même temps pour les canaux de tous les satellites vérifiant le second critère de cohérence.

Lorsque la boucle de code en mode BPSK a convergé, l'estimation de l'écart de phase entre les deux voies de corrélation gauche et droite traduit le différentiel de phase $\delta\varphi_i$ dû aux filtres analogiques du récepteur qui est indépendant des satellites (supposés parfaits). Normalement on doit donc observer un écart de phase cohérent, aux erreurs de mesures près, entre les satellites. Une incohérence peut traduire la présence d'un multi-trajet, qui induit une erreur sur la phase du code local et un déphasage entre les deux lobes.

La mesure du déphasage entre les deux lobes doit être filtrée pour être suffisamment précise au moment du test de cohérence, on utilise donc l'estimation filtrée $\delta\varphi_{i\,filtrée}$ du différentiel de phase pour effectuer le test de cohérence.

Le critère de cohérence est vérifié lorsque, pour un premier nombre de satellites Ns supérieur ou égal à un minimum prédéterminé $N_0$, l'écart entre l'estimation filtrée $\delta\varphi_i$ filtrée du différentiel de phase et la moyenne de ces estimations sur les Ns satellites, est inférieur à un seuil de différentiel de phase $S\varphi$ prédéterminé.

$$\sigma\varphi_i = \left| \delta\varphi_{i\,filtrée} - \frac{1}{Ns} \sum_{i=1\,\grave{a}Ns} \delta\varphi_{i\,filtrée} \right| \le S\varphi$$

Le seuil est typiquement inférieur ou égal à :

$$S\varphi = 30°.\frac{2\pi}{360}$$

Le nombre minimum $N_0$ de satellites est typiquement supérieur ou égal à 7. Le conditionnement du passage en phase de poursuite à un test de cohérence sur les estimations filtrées des différentiels de phase pour plusieurs canaux de traitement numérique permet d'éviter la plupart des cas de faux accrochages sur des pics secondaires dus aux multi-trajets susceptibles de biaiser la convergence du code.

Lorsque le critère de convergence est vérifié, on passe en mode poursuite.

On réalise la poursuite en mode BOC reconstitué c'est-à-dire que pour chaque satellite, on démodule indépendamment, en parallèle et en mode BPSK, les composantes droite et gauche du signal reçu, on fait une compensation du différentiel de phase et on somme de manière cohérente les sorties complexes des deux voies de corrélation. On poursuit de manière cohérente la phase du code et la phase de la porteuse centrale au moyen respectivement d'une boucle de porteuse centrale et d'une boucle de code. On corrige également les différentiels de phase estimés grâce aux signaux satellites eux-mêmes.

Ce type de poursuite en mode BOC reconstitué ainsi que la façon de corriger les défauts analogiques sont décrits dans la demande de brevet FR 2892202 qui fait partie intégrante de la description.

Dans le cas de l'application à un signal à porteuse à double décalage de porteuse, on a un seul code local, un seul intégrateur numérique de phase pour la phase de code local, un seul intégrateur numérique de phase pour la phase de la porteuse centrale locale et des voies de corrélation distinctes entre les deux lobes.

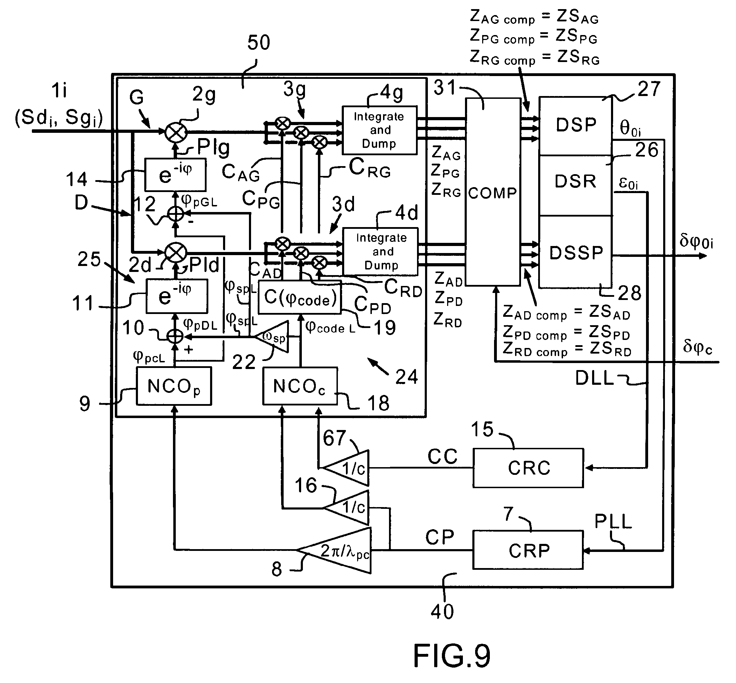

On a représenté, sur la figure 9, un canal de traitement numérique pour un satellite d'indice i, apte à réaliser la phase de poursuite.

La partie logicielle 40 est modifiée. Le correcteur de code CRC, 15 est un filtre à une entrée, à savoir les estimations de l'erreur de code et une sortie, les commandes de correcteur de code CC. Le correcteur de code CRC 15 est par exemple un filtre de Kalman à un état.

La compensation du différentiel de phase du aux voies analogiques est réalisée au moyen d'un compensateur COMP, 31, disposé comme sur le mode de réalisation représenté sur la figure 6, à partir d'une estimation du différentiel de phase $\delta\varphi_c$ commune à tous les satellites effectuée sur les différents satellites qui sont en mode poursuite par un filtre moyenneur tel que décrit dans la demande de brevet FR 2892202. On utilise la méthode de compensation par produit complexe pour corriger à la sortie des corrélateurs le différentiel de phase entre les deux voies. La compensation est donc la même pour tous les satellites.

Au moment du passage en poursuite sur plusieurs satellites en même temps l'estimation du différentiel de phase commune $\delta\varphi_c$ est initialisée, au sein du filtre moyenneur à la moyenne $\delta\varphi moy$ des estimations filtrées ($\delta_{\varphi i\,filtrée}$) des différentiels de phase ($\delta\varphi_i$) à l'issue de la phase de lever d'ambiguïté, cette moyenne étant effectuée sur les Ns satellites respectant le critère de convergence pour passer en mode poursuite :

$$\delta\varphi moy = \frac{1}{Ns} \sum_{i=1\,\grave{a}Ns} \delta\varphi_{i\,filtrée}$$

La compensation commune $\delta\varphi_c$ est ensuite entretenue à chaque instant par le filtre moyenneur à partir des estimations instantanées ($\delta\varphi_{0i}$) des différentiels de phase effectuées sur tous les satellites en mode de poursuite, tel que décrit dans la demande de brevet FR 2892202.

$$\delta\varphi_{0i} = (2\pi / \lambda_{SP}) . \{ Re[ ZS_{\Delta G}. ZS_{PG}* ] + Re[ ZS_{\Delta D}. ZS_{PD}* ] \} / \mu$$

Après compensation, on somme de façon cohérente les deux voies de corrélation gauche et droite de sorte à reconstituer l'équivalent d'une voie de corrélation BOC. La somme cohérente est réalisée avant les discriminateurs de code et de phase de porteuse centrale.

La compensation du différentiel de phase permet de faire coïncider le pic principal de la fonction BOC reconstitué avec la position du code en fin de transition (en double delta), à condition que les différentiels de phase $\delta\varphi_{i\ filtrés}$ estimés par les correcteurs de code sur chaque satellite en fin de transition soient cohérents.

L'intérêt de cette méthode par rapport à une poursuite BOC (avec une seule voie de corrélation démodulée en sous-porteuse carrée) est qu'elle permet de conserver la même architecture matérielle qu'en transition, ce qui permet de limiter les coûts du récepteur. De plus, une poursuite en mode BOC reconstitué permet, contrairement à une poursuite en mode BOC, de corriger le différentiel de phase induit par les voies analogiques.

Lorsque l'on est passé en mode poursuite sur la base du second critère de convergence, on est sûr de suivre le pic principal de la fonction d'autocorrélation. Cela permet de garantir l'intégrité des mesures de phase de code fournies pour le calcul des pseudo-distances lors de la phase de poursuite.

La phase de poursuite permet en outre d'améliorer la précision des mesures et la robustesse aux multi-trajets et au bruit thermique, avant que le système de positionnement par satellites ne procède au calcul des pseudo-distances.

En variante, lorsque la boucle de code n'a pas convergé au bout d'un temps prédéterminé, le calcul des pseudo-distances est effectué pendant l'étape de lever d'ambiguïté. Dans ce cas, on associe, à ces mesures, un facteur de qualité qui s'améliore avec le temps, par exemple l'écart type de l'erreur de code fournie par le filtre de Kalman. En effet, étant donné que l'on a la certitude que le code converge vers le bon pic, la précision des mesures de phase de code converge avec le temps vers celle de la poursuite. Ces mesures peuvent présenter une meilleure intégrité que des mesures fournies en mode poursuite dans un cas de faux accrochage. En effet, lorsque l'on s'accroche sur un mauvais pic (par exemple, si on passe trop tôt en mode poursuite), en début de phase de poursuite, on reste accroché sur ce mauvais pic pendant toute la durée de la phase de poursuite. Les mesures issues de cette phase sont alors précises mais pas intègres.

Nous avons décrit un récepteur apte à réaliser l'étape de lever d'ambiguïté dans le cas où le signal reçu est un signal BOC. Le procédé de localisation selon l'invention est également applicable à d'autres types de signaux, par exemple des signaux AltBOC.

Un signal AltBOC est, comme visible sur la figure 10a un signal émis par un satellite qui comprend deux composantes spectrales droite et gauche de fréquences respectives Fg et Fg. Chaque composante spectrale comporte un code d'étalement propre. Le signal AltBOC est assimilable à la somme de deux signaux BPSK à porteuses décalées en fréquence, à droite et à gauche, par rapport à la porteuse centrale. Un exemple typique est le signal E5ab de Galileo comprenant une porteuse centrale à 1191.795 MHz au niveau du satellite, que l'on assimile au niveau du récepteur à deux signaux BPSK E5a et E5b indépendants avec des porteuses respectivement à 1176.45 MHz et à 1207.14 MHz.

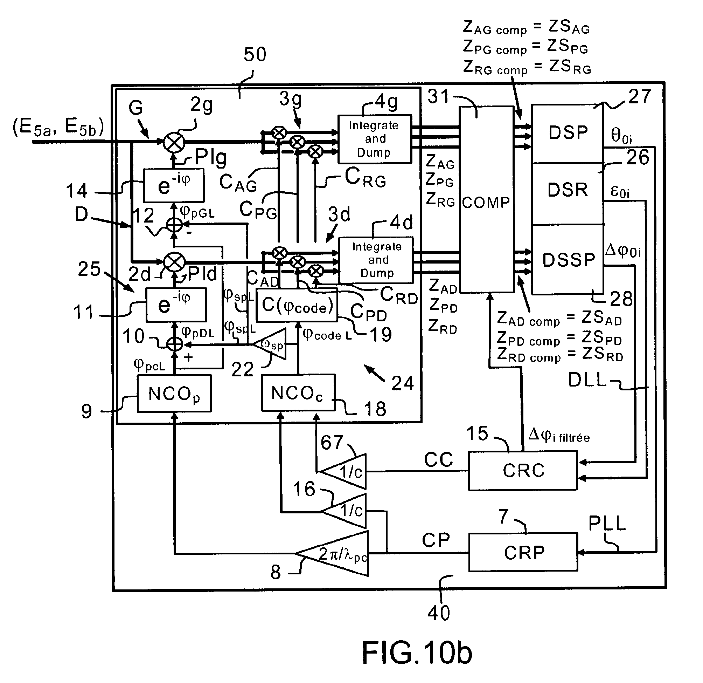

Un récepteur selon l'invention, apte à traiter un signal AltBOC, comprend une modification par rapport aux récepteurs aptes à traiter un signal BOC. Comme représenté sur la figure 10b, la partie matérielle 50 des canaux de traitement numériques comportent deux générateurs de code 19g et 19d pour générer, à partir de la phase de code, les codes locaux des composantes locales respectives gauche et droite.

Il est ainsi possible de réaliser un lever d'ambiguïté sur la base de deux signaux émis par un satellite, chacun des signaux constituant une composante droite ou gauche ayant chacune un code d'étalement propre et une fréquence propre.

Dans ce cas, le récepteur traite en parallèle les deux signaux émis par un même satellite. Un canal de traitement numérique apte à traiter les signaux émis par un même satellite comprend deux canaux de corrélation droite et gauche indépendants.

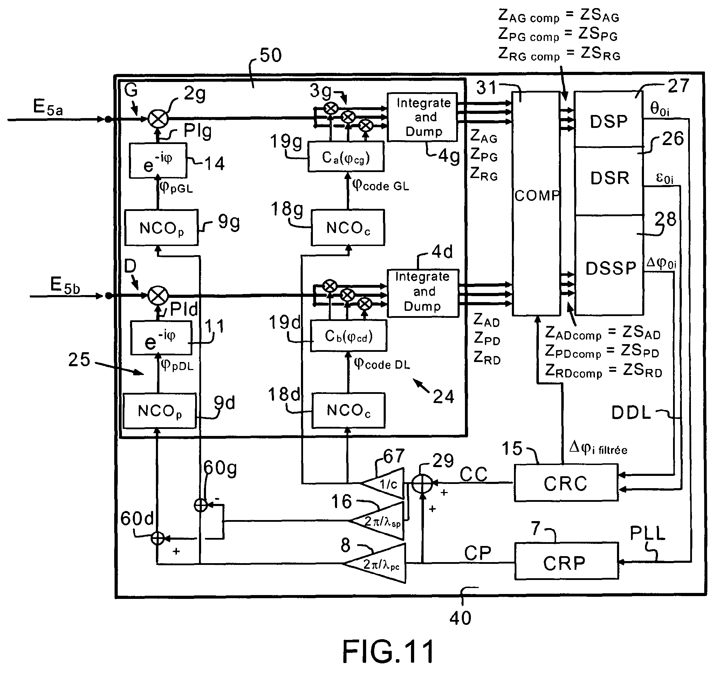

On a représenté sur la figure 11, un canal de traitement numérique apte à traiter de tels signaux. Seuls les éléments qui ne sont pas communs aux récepteurs représentés sur la figure 11 et sur la figure 4 seront décrits par la suite.

Le canal gauche G est apte à recevoir le signal individuel gauche qui est transmis au multiplieur gauche 2g. Le canal droit D est apte à recevoir le signal individuel droit qui est transmis au multiplieur droit 2d. Le canal de traitement numérique comprend un intégrateur numérique de phase de code NCOc 18g, 18d ainsi qu'un générateur de code locaux 19g, 19d pour chacune des voies de corrélation gauche G et respectivement droite D. Le canal de traitement numérique comprend en outre un intégrateur numérique de phase de porteuse 9g, 9d pour chacune des voies de corrélation gauche G et respectivement droite D.

Les intégrateurs numériques de phase de code NCOc 18g, 18d et les intégrateurs numériques de phase de porteuse 9g, 9d sont tous commandés respectivement par les commandes de correcteurs de code CC, en vitesse de code, et les commandes de correcteurs de phase de porteuse centrale CP, en vitesse de porteuse.

Les commandes de porteuse en vitesse sont ajoutées aux commandes de code en vitesse au moyen d'un additionneur 29 avant que le tout ne soit amplifié par un amplificateur de code en vitesse 67 d'une valeur de 1/c.

Les commandes de code en vitesse, sont ensuite ajoutées aux commandes de correcteurs de phase de porteuse au moyen de deux additionneurs 60g et 60d avant d'être transmises respectivement aux intégrateurs numériques de phase de porteuse gauche 9g et respectivement droite 9d.

Les commandes de code sont amplifiées avant d'être transmises aux additionneurs 60g et 60d au moyen d'un amplificateur de vitesse 61 qui amplifie ces commandes de $2\pi/\lambda$sp. Les commandes de porteuse centrale sont quant à elles amplifiées de $2\pi/\lambda$pc au moyen d'un amplificateur de code 63 avant d'être transmises aux deux additionneurs 60g et 60d.

**Revendications**

1. Procédé de lever d'ambiguïté pour déterminer le pic principal de la fonction d'autocorrélation de signaux émis par un ensemble de satellites et reçus par un récepteur d'un système de radionavigation, un signal reçu (1i) provenant d'un satellite (i) comprenant deux composantes spectrales reçues droite ($Sd_i$) et gauche ($Sg_i$) espacées en fréquence ainsi qu'un code d'étalement, une sous-porteuse et une porteuse centrale, ledit procédé de lever d'ambiguïté étant réalisé en parallèle pour les signaux provenant des différents satellites (i) en suivant les étapes suivantes :

   - on démodule les composantes reçues droite ($Sd_i$) et gauche ($Sg_i$) par un procédé de démodulation BPSK dans lequel on corrèle des composantes locales droite et gauche, comprenant une porteuse complexe locale respectivement droite (Plg) et gauche (Pld) et des codes locaux respectivement droite ($C_{AD}$, $C_{PD}$, $C_{RD}$) et gauche ($C_{AG}$, $C_{PG}$, $C_{RG}$), avec les composantes droite ($Sd_i$) et gauche ($Sg_i$) du signal reçu (1i) de sorte à produire des sorties complexes des voies de corrélation droite ($Z_{AD}$, $Z_{PD}$, $Z_{RD}$) et gauche ($Z_{AG}$, $Z_{PG}$, $Z_{RG}$),
   - on poursuit la porteuse centrale au moyen d'une boucle de porteuse centrale (PLL) qui calcule, à partir de signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$), des estimations d'erreurs de phase de porteuse centrale ($\theta_{0i}$) de sorte à générer des commandes de porteuse (CP),
   - on poursuit le code au moyen d'une boucle de code (DLL) qui calcule, à partir de signaux issus de sorties complexes des voies de corrélation droite ($ZS_{AD}$, $ZS_{PD}$, $ZS_{RD}$) et gauche ($ZS_{AG}$, $ZS_{PG}$, $ZS_{RG}$), des estimations instantanées d'erreurs de code ($\varepsilon_{0i}$) de sorte à générer des commandes de code (CC),
   - on génère de nouvelles porteuses complexes locales droite (Plg) et gauche (Pld) et de nouveaux codes des composantes locales droite ($C_{AD}$, $C_{PD}$, $C_{RD}$) et gauche ($C_{AG}$, $C_{PG}$, $C_{RG}$) à partir des commandes de code (CC) et des commandes de porteuses (CP),

   **caractérisé en ce que** les commandes de code (CC) sont en outre générées à partir d'estimations instantanées d'erreurs de phase de sous-porteuse ($\Delta\varphi_{0i}$), calculées à partir de signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$).

2. Procédé de lever d'ambiguïté selon la revendication précédente, **caractérisé en ce que** la génération des commandes de code (CC) est effectuée sur la base d'un filtre de Kalman à deux états recalé à partir des estimations instantanées des erreurs de code ($\varepsilon_{0i}$) et des estimations instantanées des erreurs de phase de sous-porteuse ($\Delta\varphi_{0i}$).

3. Procédé de lever d'ambiguïté selon l'une quelconque des revendications précédentes, **caractérisé en ce que** les signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$) sont égaux aux sorties des voies de corrélation droite ($Z_{AD}$, $Z_{PD}$, $Z_{RD}$) et gauche ($Z_{AG}$, $Z_{PG}$, $Z_{RG}$).

4. Procédé de lever d'ambiguïté selon l'une quelconque des revendications 1 à 2, **caractérisé en ce qu'**on compense la différence de phase entre les composantes gauche et droite en sortie des voies de corrélation au moyen d'une estimation filtrée ($\Delta\varphi_{i\ filtrée}$) de l'erreur de phase de sous-porteuse ($\Delta_{\varphi i}$) calculée à partir d'estimations instantanées d'erreurs de phase de sous-porteuse ($\Delta\varphi_{0i}$) et d'estimations instantanées d'erreurs de code ($\varepsilon_{0i}$) de sorte que les signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$) sont des sorties des voies de corrélation compensées respectivement droite ($Z_{ADcomp}$, $Z_{PDcomp}$, $Z_{RDcomp}$) et gauche ($Z_{AGcomp}$, $Z_{PGcomp}$, $Z_{RGcomp}$) et **en ce qu'**on réalise une poursuite cohérente de la porteuse centrale.

5. Procédé de lever d'ambiguïté selon la revendication précédente, **caractérisé qu'**après l'étape de génération des commandes de code (CC) et des commandes de porteuse (CP) :

   - on génère une phase de code locale ($\varphi$codeL), une phase de sous-porteuse locale ($\varphi$spL) et une phase de porteuse centrale locale ($\varphi$pcL),
   - on réalise la compensation de la différence de phase entre les composantes gauche et droite en sortie des voies de corrélation en ajoutant l'estimation filtrée ($\Delta\varphi_{i}$ filtrée) de l'erreur de phase de sous-porteuse à la phase de sous-porteuse locale ($\varphi$spL).

**6.** Procédé de lever d'ambiguïté selon la revendication 4, **caractérisé en ce qu'**on réalise la compensation par rotation complexe différentielle des sorties complexes des voies de corrélation droite ($Z_{AD}$, $Z_{PD}$, $Z_{RD}$) et gauche ($Z_{AG}$, $Z_{PG}$, $Z_{RG}$), la rotation complexe différentielle appliquée étant une rotation d'une phase égale à l'estimation filtrée ($\Delta\varphi_{filtrée}$) de l'erreur de phase de sous-porteuse ($\Delta\varphi_i$).

**7.** Procédé de lever d'ambiguïté selon l'une quelconque des revendications 4 à 6, **caractérisé en ce qu'**on réalise une poursuite pseudo-cohérente du code.

**8.** Procédé de lever d'ambiguïté selon l'une quelconque des revendications précédentes, **caractérisé en ce que** la corrélation est réalisée de façon étroite.

**9.** Procédé de lever d'ambiguïté selon l'une quelconque des revendications 2 à 8, **caractérisé en ce qu'**il converge, pour le signal (1i) provenant d'un satellite (i), lorsque l'écart type ($\sigma_{code\ i}$) de l'erreur de code associé à ce signal (1i) est inférieur à un seuil de code (Seuilcode) prédéterminé, l'écart type ($\sigma_{code\ i}$) étant calculée à partir de la matrice de covariance du filtre de Kalman.

**10.** Procédé de lever d'ambiguïté selon la revendication précédente, **caractérisé en ce que** le critère de convergence est vérifié lorsqu'en outre un critère de cohérence sur le différentiel de phase est vérifié, le critère de cohérence étant vérifié lorsque, pour un premier nombre de satellites (Ns) supérieur ou égal à un nombre de satellite minimum prédéterminé ($N_0$), l'écart ($\sigma\varphi_i$) entre l'estimation filtrée ($\delta\varphi_{i\ filtrée}$) du différentiel de phase et la moyenne de ces estimations effectuée sur le premier nombre Ns de satellites, est inférieur à un seuil de différentiel de phase ($S\varphi$) prédéterminé.

**11.** Procédé de localisation d'un récepteur à partir de signaux émis par un ensemble de satellites, **caractérisé en ce qu'**il comprend une étape de lever d'ambiguïté réalisée au moyen du procédé selon l'une quelconque des revendications précédentes.

**12.** Procédé de localisation d'un récepteur selon la revendication précédente, **caractérisé en ce que** l'étape de lever d'ambiguïté est précédée d'une étape de recherche en énergie et d'une étape de transition.

**13.** Procédé de localisation d'un récepteur selon l'une quelconque des revendications 11 à 12, **caractérisé en ce qu'**il comprend en outre une étape de poursuite débutant, pour un signal reçu (1i) provenant d'un satellite (i), lorsque le procédé de lever d'ambiguïté a convergé pour ce signal (1 i).

**14.** Procédé de localisation d'un récepteur selon la revendication précédente, **caractérisé en ce que** l'étape de poursuite est une poursuite en mode BOC reconstitué dans laquelle on compense les différentiels de phase dues aux voies analogiques au moyen d'une compensation commune ($\delta\varphi_c$) la compensation commune étant initialisée, au démarrage de la phase de poursuite, à la valeur de la moyenne ($\delta\varphi_{moy}$) des estimations filtrées ($\delta\varphi_{i\ filtrée}$) des différentiels de phase ($\delta\varphi_i$) à l'issue de la phase de lever d'ambiguïté, cette moyenne étant effectuée sur le premier nombre Ns satellites respectant le critère de convergence.

**15.** Procédé de localisation selon l'une quelconque des revendications 11 à 14, **caractérisé ce qu'**il comprend une étape de calculs de pseudo-distances pendant l'étape de lever d'ambiguïté.

**16.** Procédé de localisation selon l'une quelconque des revendications 12 à 16, **caractérisé ce qu'**il comprend une étape de calculs de pseudo-distances pendant l'étape de poursuite.

**17.** Récepteur de localisation apte à mettre en oeuvre le procédé de lever d'ambiguïté selon l'une quelconque des revendications 1 à 11, ledit récepteur comprenant des voies analogiques, recevant et numérisant les signaux provenance de différents satellites (i), ainsi que des canaux de traitement numérique (30) étant chacun apte à traiter les signaux reçus (1i) en provenance d'un satellite (i) et provenant des voies analogiques, un canal de traitement numérique (30) comportant une voie de corrélation matérielle (50) comportant :

    - des canaux de corrélation droite (D) et gauche (G) aptes à démoduler indépendamment deux composantes spectrales droite (Sdi) et gauche (Sgi) d'un signal reçu (1i), lesdits canaux de corrélation (D,G) comportant des moyens de corrélation (2g, 3g, 4g; 2d, 3d, 4d) des composantes spectrales droite ($Sd_i$) et gauche ($Sg_i$) d'un signal reçu (1i) avec les composantes locales droite et gauche d'un signal produit localement de sorte à produire des sorties complexes des voies de corrélation droite ($Z_{AD}$, $Z_{PD}$, $Z_{RD}$) et gauche ($Z_{AG}$, $Z_{PG}$, $Z_{RG}$),

- un circuit de corrélation de code (24) comprenant au moins un intégrateur numérique de phase de code NCOc (18), piloté par des commandes de code (CC) et de porteuse (CP), étant apte à générer des phases locales de code ($\varphi$codeL) pilotant au moins un générateur de codes locaux (19) et fournissant des codes locaux droite ($C_{AD}$, $CP_D$, $C_{RD}$) et gauche ($C_{AG}$, $C_{PG}$, $C_{RG}$) aux canaux de corrélation respectifs droite (D) et gauche (G)

- un circuit de corrélation de porteuse (25) comprenant des générateurs de porteuses droite (11) et gauche (14) des porteuses complexes locales droite (Plg) et gauche (Pld) à partir de phases générées par au moins un intégrateur numérique de phase de porteuse centrale (9), à partir d'au moins des commandes de porteuse (CP), les porteuses complexes locales droite (Pld) et gauche (Plg) étant fournies aux canaux de corrélation droite (D) et gauche (G)

- un canal de traitement numérique (30) comportant en outre un canal logiciel (40) comportant une boucle de code (DLL) et une boucle de phase de porteuse centrale ( PLL),

- la boucle de code (DLL) comportant un discriminateur de code DSR (26) calculant, à partir de signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$) des estimations instantanées d'une erreur de code ($\varepsilon_{0i}$), et fournissant ces estimations à un correcteur de code CRC (15) générant des commandes de code (CC),

- la boucle de phase de porteuse centrale (PLL) comportant un discriminateur de porteuse DSP (27) calculant, à partir de signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$), des estimations d'une erreur de phase de porteuse centrale ($\theta_{0i}$) et fournissant celle-ci à un correcteur de porteuse CRP (7) produisant des commandes de porteuse (CC),

**caractérisé en ce que** la boucle de code (DLL) comprend en outre un discriminateur de phase de sous-porteuse DSSP (28) calculant, à partir des signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$), des estimations instantanée d'une erreur de phase de sous-porteuse ($\Delta\varphi_{0i}$) ces estimations étant transmises au correcteur de code CRC (15) qui est réalisé sur la base d'un filtre de Kalman à deux états recalé à partir des estimations instantanées de l'erreur de code ($\varepsilon_{0i}$) et des estimations instantanées de l'erreur de phase de sous-porteuse ($\Delta\varphi_{0i}$).

18. Récepteur de localisation selon la revendication précédente **caractérisé en ce que** les signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$) sont les sorties des voies de corrélation droite ($Z_{AD}$, $Z_{PD}$, $Z_{RD}$) et gauche ($Z_{AG}$, $Z_{PG}$, $Z_{RG}$).

19. Récepteur de localisation selon l'une quelconque des revendications 17 à 18, **caractérisé en ce que** le circuit de corrélation de porteuse et de code sont du type corrélateur étroit.

20. Récepteur de localisation selon l'une quelconque des revendications 17 à 19, **caractérisé en ce que** le correcteur de code CRC (15) calcule, en outre, une estimation filtrée ($\Delta\varphi_{ifiltrée}$) de l'erreur de phase de sous-porteuse ($\Delta\varphi_i$) et **en ce qu'**une voie de corrélation numérique (30) comprend un moyen de compensation (31, 36) apte à compenser la différence de phase entre les composantes gauche et droite en sortie des voies de corrélation de sorte à fournir aux discriminateurs de porteuse DSP (27), de code DSR (26) et de phase de sous-porteuse DSSP (28), des signaux issus des sorties complexes des voies de corrélation droite ($ZS_{AD}$, $ZS_{PD}$, $ZS_{RD}$) et gauche ($ZS_{AG}$, $ZS_{PG}$, $ZS_{RG}$) qui sont des sorties des voies de corrélation compensées respectivement droite ($Z_{ADcomp}$, $Z_{PDcomp}$, $Z_{RDcomp}$) et gauche ($Z_{AGcomp}$, $Z_{PGcomp}$, $Z_{RGcomp}$), ledit discriminateur de phase de porteuse centrale DSP (27) réalisant une sommation cohérente des sorties des voies de corrélation compensées respectivement droite ($Z_{ADcomp}$, $Z_{PDcomp}$, $Z_{RDcomp}$) et gauche ($Z_{AGcomp}$, $Z_{PGcomp}$, $Z_{RGcomp}$) avant de calculer les estimations des erreurs de phase de porteuse centrale ($\theta_i$).

21. Récepteur de localisation selon la revendication précédente, **caractérisé en ce que** le discriminateur de code DSR (26) est du type pseudo-cohérent.

22. Récepteur de localisation selon l'une quelconque des revendications 20 à 21, **caractérisé en ce que** le moyen de compensation est réalisé sous forme d'un compensateur (31) appliquant une rotation complexe différentielle, d'une phase égale à l'estimation filtrée ($\Delta\varphi_{ifiltrée}$) de l'erreur de phase de sous-porteuse ($\Delta\varphi_i$), aux sorties complexes des voies de corrélation droite ($Z_{AD}$, $Z_{PD}$, $Z_{RD}$) et gauche ($Z_{AG}$, $Z_{PG}$, $Z_{RG}$) de sorte à produire des sorties des voies de corrélation compensées respectivement droite ($Z_{ADcomp}$, $Z_{PDcomp}$, $Z_{RDcomp}$) et gauche ($Z_{AGcomp}$, $Z_{PGcomp}$, $Z_{RGcomp}$)

23. Récepteur de localisation selon l'une quelconque des revendications 20 à 21, **caractérisé en ce que** le circuit de corrélation de porteuse (25) comportant au moins un intégrateur numérique de phase de porteuse centrale NCOp (9), piloté par au moins des commandes de porteuse (CP), étant apte à générer des phases locales de porteuse centrale ($\varphi$pc) et à les transmettre au moins un générateur de codes locaux (19) et **en ce que** la voie de corrélation matérielle (50) comporte un amplificateur de sous-porteuse (22) apte à générer une phase locale de sous-porteuse ($\varphi$spL) à partir de la phase locale de code ($\varphi$codeL) et un moyen de compensation est réalisé sous forme d'un additionneur (36) ajoutant l'estimation filtrée ($\Delta\varphi_{\text{ifiltrée}}$) de l'erreur de phase de sous-porteuse à la phase locale de sous-porteuse ($\varphi$spL).

24. Récepteur de localisation selon l'une quelconque des revendications 17 à 23, **caractérisé en ce que** le circuit de corrélation de code (24) comprend :

   - un intégrateur numérique de phase de code NCOc (18) produisant une phase locale de code ($\varphi$codeL) qui est transmise à au moins un générateur de codes locaux (19),
   - un intégrateur numérique de phase de porteuse centrale (9) générant une phase locale de porteuse centrale ($\varphi$pcL) au moyen des commandes de porteuse (CC),
   - un additionneur droite (10) sommant la phase locale de porteuse centrale ($\varphi$pcL) et la phase locale de sous-porteuse ($\varphi$spL) de sorte à obtenir une phase locale de porteuse droite ($\varphi$pDL),
   - un soustracteur gauche (14) soustrayant la phase locale de sous-porteuse ($\varphi$spL) à la phase locale de porteuse centrale ($\varphi$pcL) de sorte à obtenir une phase locale de porteuse gauche ($\varphi$pGL).

25. Récepteur de localisation selon la revendication précédente **caractérisé en ce qu'**il comprend un générateur de codes locaux (19)

26. Récepteur de localisation selon la revendication précédente **caractérisé en ce qu'**il comprend un générateur de codes locaux gauche (19g) et un générateur de codes locaux droite (19d).

27. Récepteur de localisation selon l'une quelconque des revendications 17 à 22, **caractérisé en ce qu'**il comprend un intégrateur numérique de phase de code droite (18d) et un intégrateur numérique de phase de code gauche (18g), un générateur de codes locaux gauche (19g) et un générateur de codes locaux droite (19d), un intégrateur numérique de phase de porteuse centrale gauche (9g) et intégrateur numérique de phase de porteuse centrale droite (9d).

## Claims

1. A method for resolving ambiguity so as to determine the main peak of the autocorrelation function of signals emitted by a set of satellites and received by a radio navigation system receiver, with a received signal (1i) that originates from a satellite (i) comprising two received right ($Sd_i$) and left ($Sg_i$) spectral components separated in frequency as well as a spreading code, a sub-carrier and a central carrier, said method for resolving ambiguity being carried out in parallel for signals that originate from various satellites (i) according to the following steps of:

   - demodulating the right ($Sd_i$) and left ($Sg_i$) received components by means of a BPSK demodulation method in which local right and left components, which comprise a right (Plg) and left (Pld) local complex carrier, respectively, and local right ($C_{AD}$, $C_{PD}$, $C_{RD}$) and left ($C_{AG}$, $C_{PG}$, $C_{RG}$) codes, respectively, are correlated with the right ($Sd_i$) and left ($Sg_i$) components of the received signal (1i) so as to produce complex outputs of the right ($Z_{AD}$, $Z_{PD}$, $Z_{RD}$) and left ($Z_{AG}$, $Z_{PG}$, $Z_{RG}$) correlation paths,
   - tracking the central carrier by means of a central carrier loop (PLL) that calculates, on the basis of signals coming from the complex outputs of the right ($ZS_{AD}$, $ZS_{PD}$, $ZS_{RD}$) and left ($ZS_{AG}$, $ZS_{PG}$, $ZS_{RG}$) correlation paths, estimates of the central carrier phase errors ($\theta_{0i}$) so as to generate carrier commands (CP),
   - tracking the code by means of a code loop (DLL) that calculates, on the basis of signals coming from complex outputs of the right ($ZS_{AD}$, $ZS_{PD}$, $ZS_{RD}$) and left ($ZS_{AG}$, $ZS_{PG}$, $ZS_{RG}$) correlation paths, instantaneous estimates of code errors ($\varepsilon_{0i}$) so as to generate code commands (CC),
   - generating new right (Plg) and left (Pld) local complex carriers and new codes of the right ($C_{AD}$, $C_{PD}$, $C_{RD}$) and left ($C_{AG}$, $C_{PG}$, $C_{RG}$) local components on the basis of the code commands (CC) and the carrier commands (CP),

   **characterised in that** the code commands (CC) are further generated on the basis of instantaneous estimates of sub-carrier phase errors ($\Delta\varphi_{0i}$) that are calculated on the basis of signals coming from the complex outputs of the right ($ZS_{AD}$, $ZS_{PD}$, $ZS_{RD}$) and left ($ZS_{AG}$, $ZS_{PG}$, $ZS_{RG}$) correlation paths.

2. The method for resolving ambiguity according to the preceding claim, **characterised in that** the code commands (CC) are generated on the basis of a two-state Kalman filter that is adjusted on the basis of the instantaneous estimates of the code errors ($\varepsilon_{0i}$) and the instantaneous estimates of the sub-carrier phase errors ($\Delta\varphi p_{0i}$).

3. The method for resolving ambiguity according to any one of the preceding claims, **characterised in that** the signals coming from the complex outputs of the right ($ZS_{AD}$, $ZS_{PD}$, $ZS_{RD}$) and left ($ZS_{AG}$, $ZS_{PG}$, $ZS_{RG}$) correlation paths are equal to the outputs of the right ($ZS_{AD}$, $ZS_{PD}$, $ZS_{RD}$) and left ($ZS_{AG}$, $ZS_{PG}$, $ZS_{RG}$) correlation paths.

4. The method for resolving ambiguity according to any one of claims 1 to 2, **characterised in that** the phase difference between the left and right components at the output of the correlation paths is compensated by means of a filtered estimate ($\Delta\varphi_{i\ filtered}$) of the sub-carrier phase error ($\Delta\varphi_i$) that is calculated on the basis of instantaneous estimates of sub-carrier phase errors ($\Delta\varphi_{0i}$) and instantaneous estimates of code errors ($\varepsilon_{0i}$) such that the signals coming from the complex outputs of the right ($ZS_{AD}$, $ZS_{PD}$, $ZS_{RD}$) and left ($ZS_{AG}$, $ZS_{PG}$, $ZS_{RG}$) correlation paths are outputs of the compensated right ($Z_{ADcomp}$, $Z_{PDcomp}$, $Z_{RDcomp}$) and left ($Z_{AGcomp}$, $Z_{PGcomp}$, $Z_{RGcomp}$) correlation paths, respectively, and **in that** coherent tracking of the central carrier is carried out.

5. The method for resolving ambiguity according to the preceding claim, **characterised in that** after the step of generating the code commands (CC) and carrier commands (CP):

   - a local phase code ($\varphi codeL$), a local sub-carrier code ($\varphi spL$) and a local central carrier phase ($\varphi pcL$) are generated,
   - the phase difference between the left and right components at the output of the correlation paths is compensated by adding the filtered estimate ($\Delta\varphi_{i\ filtered}$) of the sub-carrier phase error to the local sub-carrier phase ($\varphi spL$).

6. The method for resolving ambiguity according to claim 4, **characterised in that** the compensation is carried out by differential complex rotation of the complex outputs of the right ($Z_{AD}$, $Z_{PD}$, $Z_{RD}$) and left ($Z_{AG}$, $Z_{PG}$, $Z_{RG}$) correlation paths, the applied differential complex rotation being a rotation of a phase that is equal to the filtered estimate ($\Delta\varphi_{i\ filtered}$) of the sub-carrier phase error ($\Delta\varphi_i$).

7. The method for resolving ambiguity according to any one of claims 4 to 6, **characterised in that** pseudo-coherent tracking of the code is carried out.

8. The method for resolving ambiguity according to any one of the preceding claims, **characterised in that** the correlation is carried out in a narrow manner.

9. The method for resolving ambiguity according to any one of claims 2 to 8, **characterised in that** it converges, for the signal (1i) that originates from the satellite (i), when the standard deviation ($\sigma_{code}$ i) of the code error that is associated with said signal (1i) is less than a predetermined code threshold (Seuilcode), said standard deviation ($\sigma_{code\ i}$) being calculated on the basis of the covariance matrix of the Kalman filter.

10. The method for resolving ambiguity according to the preceding claim, **characterised in that** the convergence criterion is verified when a coherence criterion on the phase differential is also verified, the coherence criterion being verified when, for a first number of satellites (Ns) that is greater than or equal to a predetermined minimum number of satellites (No), the deviation ($\sigma\varphi_i$) between the filtered estimate ($\delta\varphi_{i\ filtered}$) of the phase differential and the mean of these estimates taken from the first number Ns of satellites is less than a predetermined phase differential threshold ($S\varphi$).

11. A method for locating a receiver on the basis of signals emitted by a set of satellites, **characterised in that** it comprises a step of resolving ambiguity that is carried out by means of the method according to any one of the preceding claims.

12. The method for locating a receiver according to the preceding claim, **characterised in that** the step of resolving ambiguity is preceded by an energy search step and a transition step.

13. The method for locating a receiver according to any one of claims 11 to 12, **characterised in that** it further comprises a tracking step that commences, for a received signal (1i) that originates from a satellite (i), when the method for resolving ambiguity has converged for said signal (1i).

14. The method for locating a receiver according to the preceding claim, **characterised in that** the tracking step is tracking in a reconstituted BOC mode in which the phase differentials due to the analogue paths is compensated by means of a common compensation ($\delta\varphi_c$), said common compensation being initialised, at the start of the tracking phase, to the value of the mean (($\delta\varphi_{means}$) of the filtered estimates ($\delta\varphi_{i\,filtered}$) of the phase differentials ($\delta\varphi_i$) on completion of the phase for resolving ambiguity, said mean being taken over the first number Ns of satellites that comply with the convergence criterion.

**15.** The method for locating according to any one of claims 11 to 14, **characterised in that** it comprises a step of calculating pseudo-distances during the step of resolving ambiguity.

**16.** The method for locating according to any one of claims 12 to 16, **characterised in that** it comprises a step of calculating pseudo-distances during the tracking step.

**17.** A locating receiver designed to implement the method for resolving ambiguity according to any one of claims 1 to 11, which receiver comprises analogue paths which receive and digitise the signals that originate from various satellites (i), as well as digital processing channels (30) which are each designed to process the received signals (1i) coming from a satellite (i) and from the analogue paths, a digital processing channel (30) comprising a hardware correlation path (50) comprising:

- right (D) and left (G) correlation channels designed to independently demodulate two right (Sdi) and left (Sgi) spectral components of a received signal (1i), said correlation channels (D, G) comprising means (2g, 3g, 4g; 2d, 3d, 4d) for correlating right ($Sd_i$) and left ($Sg_i$) spectral components of a received signal (1i) with the local right and left components of a locally produced signal so as to produce complex outputs of the right ($Z_{AD}$, $Z_{PD}$, $Z_{RD}$) and left ($Z_{AG}$, $Z_{PG}$, $Z_{RG}$) correlation paths,
- a code correlation circuit (24) comprising at least one code phase digital integrator NCOc (18) controlled by code (CC) and carrier (CP) commands, which are designed to generate local code phases ($\varphi codeL$) that control at least one local code generator (19) and provide local right ($C_{AD}$, $C_{PD}$, $C_{RD}$) and left ($C_{AG}$, $C_{PG}$, $C_{RG}$) codes to the respective right (D) and left (G) correlation channels,
- a carrier correlation circuit (25) comprising generators of right (11) and left (14) carriers of the right (Pld) and left (Plg) local complex carriers on the basis of phases generated by at least one central carrier phase digital integrator (9), on the basis of at least the carrier commands (CP), the right (Pld) and left (Plg) local complex carriers being supplied to the right (D) and left (G) correlation channels,
- a digital processing channel (30) further comprising a software channel (40) comprising a code loop (DLL) and a central carrier phase loop (PLL),
- said code loop (DLL) comprising a code discriminator DSR (26) calculating, on the basis of signals coming from the complex outputs of the right ($ZS_{AD}$, $ZS_{PD}$, $ZS_{RD}$) and left ($ZS_{AG}$, $ZS_{PG}$, $ZS_{RG}$) correlation paths, instantaneous estimates of a code error ($\varepsilon_{0i}$), and providing said estimates to a code corrector CRC (15) that generates code commands (CC),
- the central carrier phase loop (PLL) comprising a carrier discriminator DSP (27) calculating, on the basis of signals coming from the complex outputs of the right ($ZS_{AD}$, $ZS_{PD}$, $ZS_{RD}$) and left ($ZS_{AG}$, $ZS_{PG}$, $ZS_{RG}$) correlation paths, estimates of a central carrier phase error ($\theta_{0i}$) and supplying said estimates to a carrier corrector CRP (7) that produces carrier commands (CC),

**characterised in that** the code loop (DLL) further comprises a sub-carrier phase discriminator DSSP (28) calculating, on the basis of the signals coming from the complex outputs of the right ($ZS_{AD}$, $ZS_{PD}$, $ZS_{RD}$) and left ($ZS_{AG}$, $ZS_{PG}$, $ZS_{RG}$) correlation paths, instantaneous estimates of a sub-carrier phase error ($\Delta\varphi_{0i}$), said estimates being transmitted to the code corrector CRC (15) that is produced on the basis of a two-state Kalman filter that is adjusted on the basis of the instantaneous estimates of the code error ($\varepsilon_{0i}$) and the instantaneous estimates of the sub-carrier phase error ($\Delta\varphi_{0i}$).

**18.** The locating receiver according to the preceding claim, **characterised in that** the signals coming from the complex outputs of the right ($ZS_{AD}$, $ZS_{PD}$, $ZS_{RD}$) and left ($ZS_{AG}$, $ZS_{PG}$, $ZS_{RG}$) correlation paths are the outputs of the right ($Z_{AD}$, $Z_{PD}$, $Z_{RD}$) and left ($Z_{AG}$, $Z_{PG}$, $Z_{RG}$) correlation paths.

**19.** The locating receiver according to any one of claims 17 to 18, **characterised in that** the carrier and code correlation circuits are of the narrow correlator type.

**20.** The locating receiver according to any one of claims 17 to 19, **characterised in that** the code corrector CRC (15) further calculates a filtered estimate ($\Delta\varphi_i$ filtered) of the sub-carrier phase error ($\Delta\varphi_i$) and **in that** a digital correlation channel (30) comprises a means of compensation (31, 36) that is designed to compensate the phase difference between the left and right components at the output of the correlation paths so as to provide the carrier DSP (27), code DSR (26) and sub-carrier phase DSSP (28) discriminators with signals coming from the complex outputs of the right ($ZS_{AD}$, $ZS_{PD}$, $ZS_{RD}$) and left ($ZS_{AG}$, $ZS_{PG}$, $ZS_{RG}$) correlation paths which are outputs of the compensated right ($Z_{ADcomp}$, $Z_{PDcomp}$, $Z_{RDcomp}$) and left ($Z_{AGcomp}$, $Z_{PGcomp}$, $Z_{RGcomp}$) correlation paths, respectively, said central carrier phase discriminator DSP (27) carrying out a coherent adding of the outputs of the compensated right ($Z_{ADcomp}$, $Z_{PDcomp}$, $Z_{RDcomp}$) and left ($Z_{AGcomp}$, $Z_{PGcomp}$, $Z_{RGcomp}$) correlation paths, respectively, before calculating the estimates of the central carrier phase errors ($\theta_i$).

21. The locating receiver according to the preceding claim, **characterised in that** the code discriminator DSR (26) is of the pseudo-coherent type.

22. The locating receiver according to any one of claims 20 to 21, **characterised in that** the means of compensation is realised in the form of a compensator (31) that applies a differential complex rotation of a phase that is equal to the filtered estimate ($\Delta\varphi_{filtered}$) of the sub-carrier phase error ($\Delta\varphi_i$), to the complex outputs of the right ($Z_{AD}$, $Z_{PD}$, $Z_{RD}$) and left ($Z_{AG}$, $Z_{PG}$, $Z_{RG}$) correlation paths so as to produce compensated right ($Z_{ADcomp}$, $Z_{PDcomp}$, $Z_{RDcomp}$) and left ($Z_{AGcomp}$, $Z_{PGcomp}$, $Z_{RGcomp}$) correlation paths, respectively.

23. The locating receiver according to any one of claims 20 to 21, **characterised in that** the carrier correlation circuit (25) comprises at least one digital central carrier phase integrator NCOp (9), at least controlled by carrier commands (CP), being designed to generate local central carrier phases ($\Delta\varphi pc$) and to transmit them to at least one local code generator (19), and **in that** the hardware correlation channel (50) comprises a sub-carrier amplifier (22) that is designed to generate a local sub-carrier phase ($\Delta\varphi spL$) on the basis of the local code phase ($\Delta\varphi codeL$) and a means of compensation is realised in the form of an adder (36) that adds the filtered estimate ($\Delta\varphi_i$ filtered) of the sub-carrier phase error to the local sub-carrier phase ($\Delta\varphi spL$).

24. The locating receiver according to any one of claims 17 to 23, **characterised in that** the code correlation circuit (24) comprises:

   - a digital code phase integrator NCOc (18) producing a local code phase ($\Delta\varphi codeL$) that is transmitted to at least one local code generator (19),
   - a digital central carrier phase integrator (9) generating a local central carrier phase ($\Delta\varphi pcL$) by means of carrier commands (CC),
   - a right adder (10) adding the local central carrier phase ($\Delta\varphi pcL$) and the local sub-carrier phase ($\Delta\varphi spL$) so as to obtain a local right carrier phase ($\Delta\varphi pDL$),
   - a left subtractor (14) subtracting the local sub-carrier phase ($\Delta\varphi spL$) from the local central carrier phase ($\Delta\varphi pcL$) so as to obtain a local left carrier phase ($\Delta\varphi pGL$).

25. The locating receiver according to the preceding claim, **characterised in that** it comprises a local code generator (19).

26. The local receiver according to the preceding claim, **characterised in that** it comprises a left local code generator (19g) and a right local code generator (19d).

27. The locating receiver according to any one of claims 17 to 22, **characterised in that** it comprises a right digital code phase integrator (18d) and a left digital code phase integrator (18g), a left local code generator (19g) and a right local code generator (19d), a left central digital carrier phase integrator (9g) and a right central digital carrier phase integrator (9d).

**Patentansprüche**

1. Verfahren zum Beheben von Ambiguität, um den Haupt-Peak der Autokorrelationsfunktion von Signalen zu ermitteln, die von einem Satz von Satelliten ausgestrahlt und von einem Funknavigationssystemempfänger empfangen werden, wobei ein von einem Satelliten (i) kommendes empfangenes Signal (1i) zwei empfangene rechte ($Sd_i$) und linke ($Sg_i$) frequenzmäßig getrennte Spektralkomponenten sowie einen Spreizcode, einen Subträger und einen Hauptträger umfasst, wobei das Verfahren zum Beheben von Ambiguität parallel für von verschiedenen Satelliten (i) kommende Signale gemäß den folgenden Schritten ausgeführt wird:

- Demodulieren der rechten ($Sd_i$) und linken ($Sg_i$) empfangenen Komponenten mit einem BPSK-Demodulationsverfahren, in dem lokale rechte und linke Komponenten, die jeweils einen rechten (Plg) und linken (Pld) lokalen komplexen Träger sowie lokale rechte ($C_{AD}$, $C_{PD}$, $C_{RD}$) und linke ($C_{AG}$, $C_{PG}$, $C_{RG}$) Codes umfassen, mit der rechten ($Sd_i$) und linken ($Sg_i$) Komponente des empfangenen Signals (1i) korreliert werden, um komplexe Ausgänge der rechten ($Z_{AD}$, $Z_{PD}$, $Z_{RD}$) und linken ($Z_{AG}$, $Z_{PG}$, $Z_{RG}$) Korrelationspfade zu erzeugen,
- Verfolgen des Hauptträgers mit einem Hauptträgerkreis (PLL), der auf der Basis von von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signalen Schätzungen der Hauptträgerphasenfehler ($\theta_{0i}$) berechnet, um Trägerbefehle (CP) zu erzeugen,
- Verfolgen des Codes mit einem Code-Kreis (DLL), der auf der Basis von von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signalen momentane Schätzungen von Code-Fehlern ($\varepsilon_{0i}$) berechnet, um Code-Befehle (CC) zu erzeugen,
- Erzeugen eines neuen rechten (Plg) und linken (Pld) lokalen komplexen Trägers und neuen Codes der rechten ($C_{AD}$, $C_{PD}$, $C_{RD}$) und linken ($C_{AG}$, $C_{PG}$, $C_{RG}$) lokalen Komponenten auf der Basis der Code-Befehle (CC) und der Trägerbefehle (CP),

**dadurch gekennzeichnet, dass** die Code-Befehle (CC) ferner auf der Basis von momentanen Schätzungen von Subträger-Phasenfehlern ($\Delta\varphi_{0i}$) erzeugt werden, die auf der Basis von von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signalen berechnet werden.

2. Verfahren zum Beheben von Ambiguität nach dem vorherigen Anspruch, **dadurch gekennzeichnet, dass** die Code-Befehle (CC) auf der Basis eines Zweizustands-Kalman-Filters erzeugt werden, das auf der Basis der momentanen Schätzungen der Code-Fehler ($\varepsilon_{0i}$) und der momentanen Schätzungen der Subträger-Phasenfehler ($\Delta\varphi_{0i}$) justiert wird.

3. Verfahren zum Beheben von Ambiguität nach einem der vorherigen Ansprüche, **dadurch gekennzeichnet, dass** die von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signale gleich den Ausgängen der rechten ($ZS_{AD}$, $ZS_{PD}$, $ZS_{RD}$) und linken ($ZS_{AG}$, $ZS_{PG}$, $ZS_{RG}$) Korrelationspfade sind.

4. Verfahren zum Beheben von Ambiguität nach einem der Ansprüche 1 bis 2, **dadurch gekennzeichnet, dass** die Phasendifferenz zwischen der linken und rechten Komponente am Ausgang der Korrelationspfade mit einer gefilterten Schätzung ($\Delta\varphi_i$ gefiltert) des Subträger-Phasenfehlers ($\Delta\varphi_i$) kompensiert wird, der auf der Basis von momentanen Schätzungen von Subträger-Phasenfehlern ($\Delta\varphi_{0i}$) und momentanen Schätzungen von Code-Fehlern ($\varepsilon_{0i}$) berechnet wird, so dass die von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signale Ausgänge jeweils der kompensierten rechten ($Z_{ADkomp}$, $Z_{PDkomp}$, $Z_{RDkomp}$) und linken ($Z_{AGkomp}$, $Z_{PGkomp}$, $Z_{RGcomp}$) Korrelationspfade sind, und **dadurch**, dass ein kohärentes Verfolgen des Hauptträgers durchgeführt wird.

5. Verfahren zum Beheben von Ambiguität nach dem vorherigen Anspruch, **dadurch gekennzeichnet, dass** nach dem Schritt des Erzeugens der Code-Befehle (CC) und Trägerbefehle (CP):

- ein lokaler Phasen-Code ($\Delta\varphi$codeL), ein lokaler Subträger-Code ($\Delta\varphi$spL) und eine lokale Hauptträgerphase ($\Delta\varphi$pcL) erzeugt werden,
- die Phasendifferenz zwischen de linken und rechten Komponente am Ausgang der Korrelationspfade durch Addieren der gefilterten Schätzung ($\Delta\varphi_i$ gefiltert) des Subträger-Phasenfehlers zur lokalen Subträgerphase ($\Delta\varphi$spL) kompensiert wird.

6. Verfahren zum Beheben von Ambiguität nach Anspruch 4, **dadurch gekennzeichnet, dass** die Kompensation durch differentielle komplexe Rotation der komplexen Ausgänge der rechten ($Z_{AD}$, $Z_{PD}$, $Z_{RD}$) und linken ($Z_{AG}$, $Z_{PG}$, $Z_{RG}$) Korrelationspfade durchgeführt wird, wobei die angewandte differentielle komplexe Rotation eine Rotation einer Phase ist, die gleich der gefilterten Schätzung ($\Delta\varphi_i$ gefiltert) des Subträger-Phasenfehlers ($\Delta\varphi_i$) ist.

7. Verfahren zum Beheben von Ambiguität nach einem der Ansprüche 4 bis 6, **dadurch gekennzeichnet, dass** eine pseudo-kohärente Verfolgung des Codes durchgeführt wird.

8. Verfahren zum Beheben von Ambiguität nach einem der vorherigen Ansprüche, **dadurch gekennzeichnet, dass** die Korrelation auf enge Weise durchgeführt wird.

**9.** Verfahren zum Beheben von Ambiguität nach einem der Ansprüche 2 bis 8, **dadurch gekennzeichnet, dass** es für das von einem Satelliten (i) kommende Signal (1i) konvergiert, wenn die Standardabweichung ($\sigma_{code\ i}$) des mit diesem Signal (1i) assoziierten Fehlercodes geringer ist als ein vorbestimmter Code-Schwellenwert (Seuilcode), wobei die Standardabweichung ($\sigma_{code\ i}$) auf der Basis der Kovarianz-Matrix des Kalman-Filters berechnet wird.

**10.** Verfahren zum Beheben von Ambiguität nach dem vorherigen Anspruch, **dadurch gekennzeichnet, dass** das Konvergenzkriterium verifiziert wird, wenn auch ein Kohärenzkriterium am Phasendifferential verifiziert wird, wobei das Kohärenzkriterium verifiziert wird, wenn für eine erste Anzahl von Satelliten (Ns), die gleich oder größer als eine vorbestimmte Mindestzahl von Satelliten ($N_0$) ist, die Differenz ($\Delta\varphi_i$) zwischen der gefilterten Schätzung ($\Delta\varphi_{i\ gefiltert}$) des Phasendifferentials und dem Mittel dieser Schätzungen aus der ersten Zahl Ns von Satelliten kleiner als ein vorbestimmter Phasendifferentialschwellenwert ($S\varphi$) ist.

**11.** Verfahren zum Orten eines Empfängers auf der Basis von Signalen, die von einem Satz von Satelliten ausgestrahlt werden, **dadurch gekennzeichnet, dass** es einen Schritt des Behebens von Ambiguität beinhaltet, der mit dem Verfahren nach einem der vorherigen Ansprüche ausgeführt wird.

**12.** Verfahren zum Orten eines Empfängers nach dem vorherigen Anspruch, **dadurch gekennzeichnet, dass** dem Schritt des Behebens von Ambiguität ein Energiesuchschritt und ein Übergangsschritt vorangehen.

**13.** Verfahren zum Orten eines Empfängers nach einem der Ansprüche 11 bis 12, **dadurch gekennzeichnet, dass** es ferner einen Verfolgungsschritt beinhaltet, der für ein von einem Satelliten (i) kommendes empfangenes Signal (1i) beginnt, wenn das Verfahren zum Beheben von Ambiguität für dieses Signal (1i) konvergiert ist.

**14.** Verfahren zum Orten eines Empfängers nach dem vorherigen Anspruch, **dadurch gekennzeichnet, dass** der Verfolgungsschritt eine Verfolgung in einem rekonstituierten BOC-Modus ist, in dem die Phasendifferentiale aufgrund der Analogpfade mittels einer gemeinsamen Kompensation ($\delta\varphi_c$) kompensiert werden, wobei die gemeinsame Kompensation zu Beginn der Verfolgungsphase auf den Wert des Durchschnitts ($\delta\varphi_{Durchschnitt}$) der gefilterten Schätzungen ($\delta\varphi_{i\ gefiltert}$) der Phasendifferentiale ($\delta\varphi_i$) aus der Ambiguitätsbehebungsphase initialisiert wird, wobei dieser Durchschnitt über die erste Anzahl Ns von Satelliten genommen wird, die das Konvergenzkriterium erfüllen.

**15.** Verfahren zum Orten nach einem der Ansprüche 11 bis 14, **dadurch gekennzeichnet, dass** es einen Schritt des Berechnens von Pseudodistanzen während des Ambiguitätsbehebungsschrittes beinhaltet.

**16.** Verfahren zum Orten nach einem der Ansprüche 12 bis 16, **dadurch gekennzeichnet, dass** es einen Schritt des Berechnens von Pseudodistanzen während des Verfolgungsschrittes beinhaltet.

**17.** Ortungsempfänger zum Ausführen des Verfahrens zum Beheben von Ambiguität nach einem der Ansprüche 1 bis 11, wobei der Empfänger Analogpfade zum Empfangen und Digitalisieren der von verschiedenen Satelliten (i) kommenden Signale sowie Digitalverarbeitungskanäle (30) umfasst, die jeweils so ausgelegt sind, dass sie die von einem Satelliten (i) und den Analogpfaden kommenden empfangenen Signale (1i) verarbeiten, wobei ein Digitalverarbeitungskanal (30) einen Hardware-Korrelationspfad (50) umfasst, der Folgendes umfasst:

- einen rechten (D) und linken (G) Korrelationskanal zum unabhängigen Demodulieren von zwei rechten (Sdi) und linken (Sgi) Spektralkomponenten eines empfangenen Signals (1i), wobei die Korrelationskanäle (D, G) Mittel (2g, 3g, 4g; 2d, 3d, 4d) zum Korrelieren der rechten ($Sd_i$) und linken ($Sg_i$) Spektralkomponente eines empfangenen Signals (1i) mit der lokalen rechten und linken Komponente eines lokal erzeugten Signals umfassen, um komplexe Ausgänge der rechten ($Z_{AD}$, $Z_{PD}$, $Z_{RD}$) und linken ($Z_{AG}$, $Z_{PG}$, $Z_{RG}$) Korrelationspfade zu erzeugen,
- eine Code-Korrelationsschaltung (24), die wenigstens einen Code-Phasen-Digitalintegrator NCOc (18) umfasst, der durch Code- (CC) und Träger- (CP) Befehle gesteuert wird, so ausgelegt, dass sie lokale Code-Phasen ($\varphi codeL$) erzeugt, die wenigstens einen lokalen Code-Generator (19) steuern und lokale rechte ($C_{AD}$, $C_{PD}$, $C_{RD}$) und linke ($C_{AG}$, $C_{PG}$, $C_{RG}$) Codes zu dem jeweiligen rechten (D) und linken (G) Korrelationskanal senden,
- eine Trägerkorrelationsschaltung (25), die Generatoren von einem rechten (11) und linken (14) Träger des rechten (Pld) und linken (Plg) lokalen komplexen Trägers auf der Basis von Phasen umfasst, die von wenigstens einem Hauptträger-Phasendigitalintegrator (9) auf der Basis von wenigstens den Trägerbefehlen (CP) erzeugt werden, wobei der rechte (Pld) und linke (Plg) lokale komplexe Träger zu dem rechten (D) und linken (G) Korrelationskanal gesendet werden,

- einen Digitalverarbeitungskanal (30), der ferner einen Software-Kanal (40) umfasst, der einen Code-Kreis (DLL) und einen Hauptträger-Phasenkreis (PLL) umfasst,
- wobei der Code-Kreis (DLL) einen Code-Diskriminator DSR (26) zum Berechnen, auf der Basis von von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signalen, von momentanen Schätzungen eines Code-Fehlers ($s_{0i}$) und zum Liefern der Schätzungen zu einem Code-Korrektor CRC (15) berechnet, der Code-Befehle (CC) erzeugt,
- wobei der Hauptträger-Phasenkreis (PLL) einen Trägerdiskriminator DSP (27) umfasst, der auf der Basis von von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signalen Schätzungen eines Hauptträger-Phasenfehlers ($\theta_{0i}$) berechnet und diese Schätzungen zu einem Trägerkorrektor CRP (7) sendet, der Trägerbefehle (CC) erzeugt,

**dadurch gekennzeichnet, dass** der Code-Kreis (DLL) ferner einen Subträger-Phasendiskriminator DSSP (28) umfasst, der auf der Basis der von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommenden Signale momentane Schätzungen eines Subträger-Phasenfehlers ($\Delta\varphi_{0i}$) berechnet, wobei diese Schätzungen zum Code-Korrektor CRC (15) gesendet werden, der auf der Basis eines Zweizustands-Kalman-Filters erzeugt wird, das auf der Basis der momentanen Schätzungen des Code-Fehlers ($\varepsilon_{0i}$) und der momentanen Schätzungen des Subträger-Phasenfehlers ($\Delta\varphi_{0i}$) justiert wird.

18. Ortungsempfänger nach dem vorherigen Anspruch, **dadurch gekennzeichnet, dass** die von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationskanäle kommenden Signale die Ausgänge der rechten ($Z_{AD}$, $Z_{PD}$, $Z_{RD}$) und linken ($Z_{AG}$, $Z_{PG}$, $Z_{RG}$) Korrelationspfade sind.

19. Ortungsempfänger nach einem der Ansprüche 17 bis 18, **dadurch gekennzeichnet, dass** die Träger- und Code-Korrelationsschaltungen vom engen Korrelatortyp sind.

20. Ortungsempfänger nach einem der Ansprüche 17 bis 19, **dadurch gekennzeichnet, dass** der Code-Korrektor CRC (15) ferner eine gefilterte Schätzung ($\Delta\varphi_{i\,gefiltert}$) des Subträger-Phasenfehlers ($\Delta\varphi_i$) berechnet, und **dadurch**, dass ein Digitalkorrelationspfad (30) ein Kompensationsmittel (31, 36) umfasst, das so ausgelegt ist, dass es die Phasendifferenz zwischen der linken und rechten Komponente am Ausgang der Korrelationspfade kompensiert, um zu den Diskriminatoren von Träger DSP (27), Code DSR (26) und Subträgerphase DSSP (28), von den komplexen Ausgängen der rechten ($ZS_{AD}$, $ZS_{PD}$, $ZS_{RD}$) und linken ($ZS_{AG}$, $ZS_{PG}$, $ZS_{RG}$) Korrelationspfade kommende Signale zu übertragen, die jeweils Ausgänge der kompensierten rechten ($Z_{ADkomp}$, $Z_{PDkomp}$, $Z_{RDkomp}$) und linken ($Z_{AGkomp}$, $Z_{PGkomp}$, $Z_{RGkomp}$) Korrelationspfade sind, wobei der Hauptträger-Phasendiskriminator DSP (27) eine kohärente Summierung der Ausgänge jeweils der kompensierten rechten ($Z_{ADkomp}$, $Z_{PDkomp}$, $Z_{RDkomp}$) und linken ($Z_{AGkomp}$, $Z_{PGkomp}$, $Z_{RGkomp}$) Korrelationspfade vor dem Berechnen der Schätzungen der Hauptträger-Phasenfehler ($\theta_i$) durchführt.

21. Ortungsempfänger nach dem vorherigen Anspruch, **dadurch gekennzeichnet, dass** der Code-Diskriminator DSR (26) vom pseudo-kohärenten Typ ist.

22. Ortungsempfänger nach einem der Ansprüche 20 bis 21, **dadurch gekennzeichnet, dass** das Kompensationsmittel in Form eines Kompensators (31) realisiert wird, der eine differentiale komplexe Rotation einer Phase, die gleich der gefilterten Schätzung ($\Delta\varphi_{gefiltert}$ des Subträger-Phasenfehlers ($\Delta\varphi_i$) ist, auf die komplexen Ausgänge der rechten ($Z_{AD}$, $Z_{PD}$, $Z_{RD}$) und linken ($Z_{AG}$, $Z_{PG}$, $Z_{RG}$) Korrelationspfade anwendet, um jeweils kompensierte rechte ($Z_{ADkomp}$, $Z_{PDkomp}$, $Z_{RDkomp}$) und linke ($Z_{AGkomp}$, $Z_{PGkomp}$, $Z_{RGkomp}$) Korrelationspfade zu erzeugen.

23. Ortungsempfänger nach einem der Ansprüche 20 bis 21, **dadurch gekennzeichnet, dass** die Trägerkorrelationsschaltung (25) wenigstens einen digitalen Hauptträger-Phasenintegrator NCOp (9) umfasst, wenigstens gesteuert durch Trägerbefehle (CP), die so ausgelegt sind, dass sie lokale Hauptträgerphasen ($\varphi pc$) erzeugen und sie zu wenigstens einem lokalen Code-Generator (19) senden, und **dadurch**, dass der Hardware-Korrelationspfad (50) einen Subträgerverstärker (22) umfasst, der so ausgelegt ist, dass er eine lokale Subträgerphase ($\varphi spL$) auf der Basis der lokalen Code-Phase ($\varphi codeL$) erzeugt, und ein Kompensationsmittel in Form eines Addierglieds (36) ausgelegt ist, das die gefilterte Schätzung ($\Delta\varphi_{i\,gefiltert}$) des Subträger-Phasenfehlers zur lokalen Subträgerphase ($\varphi spL$) addiert.

24. Ortungsempfänger nach einem der Ansprüche 17 bis 23, **dadurch gekennzeichnet, dass** die Code-Korrelationsschaltung (24) Folgendes umfasst:

- einen digitalen Code-Phasenintegrator NCOc (18) zum Erzeugen einer lokalen Code-Phase ($\varphi$codeL), die zu wenigstens einem lokalen Code-Generator (19) gesendet wird,
- einen digitalen Hauptträger-Phasenintegrator (9) zum Erzeugen einer lokalen Hauptträgerphase ($\varphi$pcL) mittels Trägerbefehlen (CC),
- ein rechtes Addierglied (10) zum Addieren der lokalen Hauptträgerphase ($\varphi$pcL) und der lokalen Subträgerphase ($\varphi$spL), um eine lokale rechte Trägerphase ($\varphi$pDL) zu erhalten,
- ein linkes Subtrahierglied (14) zum Subtrahieren der lokalen Subträgerphase ($\varphi$spL) von der lokalen Hauptträgerphase ($\varphi$pcL), um eine lokale linke Trägerphase ($\varphi$pGL) zu erhalten.

25. Ortungsempfänger nach dem vorherigen Anspruch, **dadurch gekennzeichnet, dass** er einen lokalen Code-Generator (19) umfasst.

26. Lokaler Empfänger nach dem vorherigen Anspruch, **dadurch gekennzeichnet, dass** er einen linken lokalen Code-Generator (19g) und einen rechten lokalen Code-Generator (19d) umfasst.

27. Ortungsempfänger nach einem der Ansprüche 17 bis 22, **dadurch gekennzeichnet, dass** er einen rechten digitalen Codephasenintegrator (18d) und einen linken digitalen Codephasenintegrator (18g), einen linken lokalen Code-Generator (19g) und einen rechten lokalen Code-Generator (19d), einen linken digitalen Hauptträger-Phasenintegrator (9g) und einen rechten digitalen Hauptträger-Phasenintegrator (9d) umfasst.

Code
d'étalement :

$L_{chip}$

Porteuse :

Signal :

Fonction
d'autocorrélation :

$R(\tau)$

$- L_{chip}$   0   $+L_{chip}$   $\tau$

Densité spectrale
de puissance :

$D(f)$

Fpc - Fcode   Fpc   Fpc + Fcode   f

# FIG.1

FIG.2

FIG.3a

FIG.3b

FIG.4

EP 2 221 628 B1

FIG.5

EP 2 221 628 B1

FIG.6

FIG.7

EP 2 221 628 B1

Seuil de
décrochage

$Z_{Pcoh}$  $Z_{pG\ comp}$  $Z_{pD\ comp}$

Boucle
décrochée

Boucle
accrochée

3 dB

C/N0 (dBHz)
signal BOC

3 dB

# FIG.8

Signal E5a

Signal E5b

FpG
= 1176.45 MHz

Fpc
= 1191.795 MHz

FpD
= 1207.14 MHz

Fréquence

# FIG.10a

FIG.9

EP 2 221 628 B1

FIG.10b

FIG.11

EP 2 221 628 B1

**RÉFÉRENCES CITÉES DANS LA DESCRIPTION**

**Documents brevets cités dans la description**

- FR 2892202